# EUROPEAN PATENT APPLICATION

(11) **EP 4 277 239 A1**
(43) Date of publication of application: **15.11.2023**
(21) Application number: 21905691.8
(22) Date of filing: 14.12.2021
(51) Int. Cl.: H04L 67/00, H04L 67/53

(54) **CLOUD PLATFORM AND BUCKET MANAGEMENT METHOD FOR OBJECT STORAGE SERVICE PROVIDED THEREBY**

(30) Priority: 14.12.2020 CN 202011469065; 30.12.2020 CN 202011628962
(71) Applicant: Huawei Cloud Computing Technologies Co., Ltd., Guizhou 550025 (CN)
(72) Inventor: BAI, Pingchang, Shenzhen, Guangdong 518129 (CN)
(74) Representative: Huawei European IPR
(86) International application number: PCT/CN2021/137733
(87) International publication number: WO 2022/127762

(57) **Abstract**

This application provides a cloud platform and a bucket management method thereof. The method includes the following steps: receiving a dynamic bucket creation instruction inputted by a tenant, creating a domain name of a dynamic bucket according to the dynamic bucket creation instruction, associating the domain name of the dynamic bucket with a first static bucket set in a first region and a second static bucket set in a second region, where an object stored in the second static bucket is a cross-region backup of an object stored in the first static bucket, detecting working statuses of the first static bucket and the second static bucket, receiving an access request sent by a client for the domain name of the dynamic bucket, and sending, to the client based on the working statuses, an IP address of the first static bucket associated with the domain name of the dynamic bucket or an IP address of the second static bucket associated with the domain name of the dynamic bucket. Based on the foregoing solution, the client can access the first static bucket or the second static bucket by merely accessing the domain name of the dynamic bucket, with no need to consider the working statuses of the first static bucket and the second static bucket.

## Description

### TECHNICAL FIELD

This application relates to the field of cloud technologies, and in particular, to a cloud platform and a bucket management method for an object storage service provided by the cloud platform.

### BACKGROUND

An object storage service (Object Storage Service, OBS) is an object-based service that provides tenants of public cloud with massive, secure, highly reliable, and cost-effective data storage capabilities.

A bucket (bucket) is a container for storing objects in OBS. Each bucket has its own attributes such as a storage class, access permissions, and a region. A bucket is accessible to tenants through its access domain name over the Internet. Buckets may be set in different regions according to actual requirements.

Buckets require cross-region data redundancy and backup. However, in an existing OBS service, different domain names are respectively set for at least two buckets in a cross-region backup policy, and clients access buckets in different regions based on different domain names. If a bucket in one region is faulty, the client needs to change a domain name of a bucket to be accessed to access a bucket in another region, resulting in inconvenience.

### SUMMARY

This application provides a cloud platform and a bucket management method of the cloud platform, to improve convenience of accessing by a client a static bucket for which a cross-region backup is set.

According to a first aspect, this application provides a method for providing a cloud storage service, including: configuring a first data bucket and a second data bucket for a tenant, where the first data bucket is set in a first region, the second data bucket is set in a second region, and a data object stored in the second data bucket is a cross-region backup of a data object stored in the first data bucket; receiving a third data bucket creation instruction inputted by the tenant; providing a domain name of a third data bucket to the tenant according to the third data bucket creation instruction, receiving an access request sent by a client for the domain name of the third data bucket, and selecting a target data bucket from the first data bucket and the second data bucket based on working statuses of the first data bucket and the second data bucket; and returning an IP address of the target data bucket to the client.

In this application, the domain name of the third data bucket is set for the first data bucket and the second data bucket between which there is a backup relationship. The client can access the first data bucket or the second data bucket by merely accessing the domain name of the third data bucket, with no need to consider the working statuses of the first data bucket and the second data bucket. This improves user experience.

In a possible implementation of the first aspect, the configuring a first data bucket and a second data bucket for a tenant is implemented in the following manner: receiving a first data bucket creation instruction inputted by the tenant, where the first data bucket creation instruction indicates the first region specified by the tenant, and creating the first data bucket in the first region according to the first data bucket creation instruction, where the first data bucket is used to store an object uploaded by the tenant; and receiving a second data bucket creation instruction inputted by the tenant, where the second data bucket creation instruction indicates the second region specified by the tenant, and creating the second data bucket in the second region according to the second data bucket creation instruction.

In this implementation, a cloud platform receives a data bucket creation instruction and creates the first and second data buckets. The tenant may first create the first and second data buckets, and as required, create the domain name of the third data bucket and set the domain name of the third data bucket to be associated with the first and second data buckets. Therefore, the cloud platform may provide a flexible bucket setting manner, allowing the tenant to further set, on the basis of a plurality of created data buckets when there is a service requirement, the domain name to be associated with the plurality of created data buckets.

In a possible implementation of the first aspect, the method according to the first aspect further includes the following steps: receiving an inter-bucket cross-region configuration instruction inputted by the tenant, where the inter-bucket cross-region configuration instruction indicates to use the first data bucket as a source bucket and use the second data bucket as a target bucket; and replicating the object stored in the source bucket into the target bucket across regions according to the inter-bucket cross-region configuration instruction.

In this implementation, the cloud platform receives the inter-bucket cross-region configuration instruction and creates an inter-bucket cross-region backup. The tenant may first create two data buckets, and then set the two data buckets for a cross-region backup as required, so that a flexible bucket setting manner can be provided.

In a possible implementation of the first aspect, the selecting a target data bucket from the first data bucket and the second data bucket based on working statuses of the first data bucket and the second data bucket includes: if the working status of either of the first data bucket and the second data bucket is abnormal, selecting, from the first data bucket and the second data bucket, a data bucket whose working status is normal as the target data bucket.

In this implementation, the cloud platform is responsible for performing status detection on a data bucket, to ensure that an IP address of a data bucket whose working status is abnormal is not sent to the client.

In a possible implementation of the first aspect, the selecting a target data bucket from the first data bucket and the second data bucket based on working statuses of the first data bucket and the second data bucket includes: selecting a data bucket specified by the tenant as the target data bucket, or selecting a data bucket that is physically nearest to the client as the target data bucket.

In this implementation, when determining that both the first and second data buckets work normally, the cloud platform may select a data bucket as the target data bucket according to a fixed rule.

In a possible implementation of the first aspect, the method further includes: obtaining a bucket access policy for the tenant, where the bucket access policy indicates the cloud platform to select the data bucket that is physically nearest to the client as the target data bucket or select the data bucket specified by the tenant as the target data bucket when determining that the working statuses of the first data bucket and the second data bucket are both normal.

In this implementation, the cloud platform provides the tenant with a representation portal, for the tenant to input a policy to determine which rule is preferentially used to select a data bucket as the target data bucket when both the first data bucket and the second data bucket work normally.

According to a second aspect, this application provides a data bucket management method for an object storage service, including: receiving a data bucket creation instruction inputted by a tenant, where the data bucket creation instruction indicates a first region and a second region; creating a first data bucket in the first region, and creating a second data bucket in the second region, where an object stored in the first data bucket is set as a cross-region backup of an object stored in the second data bucket; providing the tenant with a domain name of a third data bucket; receiving an access request sent by a client for the domain name of the third data bucket, and selecting a target data bucket from the first data bucket and the second data bucket based on working statuses of the first data bucket and the second data bucket; and returning an IP address of the target data bucket to the client.

The tenant creates the third data bucket by specifying at least two regions. A cloud platform may create the first and second data buckets in specified regions, and set a mutual backup relationship between the data buckets. This can reduce a workload of the tenant.

In a possible implementation of the second aspect, the selecting a target data bucket from the first data bucket and the second data bucket based on working statuses of the first data bucket and the second data bucket includes: if it is determined that the working status of one of the first data bucket and the second data bucket is abnormal, selecting, from the first data bucket and the second data bucket, a data bucket whose working status is normal as the target data bucket.

The cloud platform provides a fault tolerance function. When detecting that a working status of a data bucket is abnormal, the cloud platform directly returns an IP address of a data bucket whose working status is normal to the client, keeping the client from accessing an abnormal data bucket.

In a possible implementation of the second aspect, the selecting a target data bucket from the first data bucket and the second data bucket based on working statuses of the first data bucket and the second data bucket includes: selecting the first data bucket or the second data bucket as the target data bucket if it is determined that the working statuses of the first data bucket and the second data bucket are both normal.

According to a third aspect, this application provides a data bucket management method for an object storage service, including: configuring a first data bucket and a second data bucket for a tenant, where the first data bucket is set in a first region, the second data bucket is set in a second region, and a data object stored in the second data bucket is a cross-region backup of a data object stored in the first data bucket; receiving an access request sent by a client for a domain name of the first data bucket, and selecting a target data bucket from the first data bucket and the second data bucket based on working statuses of the first data bucket and the second data bucket; and returning an IP address of the target data bucket to the client.

In this implementation, the client does not need to change a domain name to be accessed, and the tenant merely needs to create the second data bucket on a cloud platform and input an inter-bucket cross-region configuration instruction into the cloud platform. After obtaining the access request sent by the client for the domain name of the first data bucket, the cloud platform returns, to the client based on the working statuses of the first data bucket and the second data bucket, an IP address of a data bucket whose working status is normal. Embodiment 3 is particularly applicable to a scenario in which the tenant does not want to change a domain name of an existing data bucket to a domain name of a dynamic bucket on the client.

In a possible implementation of the third aspect, the configuring a first data bucket and a second data bucket for a tenant includes: receiving a first data bucket creation instruction inputted by the tenant, where the first data bucket creation instruction indicates the first region specified by the tenant, and creating the first data bucket in the first region according to the first data bucket creation instruction, where the first data bucket is used to store an object uploaded by the tenant; and receiving a second data bucket creation instruction inputted by the tenant, where the second data bucket creation instruction indicates the second region specified by the tenant, and creating the second data bucket in the second region according to the second data bucket creation instruction.

In this implementation, the cloud platform receives a data bucket creation instruction and creates the first and second data buckets. The tenant may first create the first and second data buckets, and as required, create a domain name of a third data bucket and set the domain name of the third data bucket to be associated with the first and second data buckets. Therefore, the cloud platform may provide a flexible bucket setting manner, allowing the tenant to further set, on the basis of a plurality of created data buckets when there is a service requirement, the domain name to be associated with the plurality of created data buckets.

In a possible implementation of the third aspect, the method further includes: receiving the inter-bucket cross-region configuration instruction inputted by the tenant, where the inter-bucket cross-region configuration instruction indicates to use the first data bucket as a source bucket and use the second data bucket as a target bucket; and replicating the object stored in the source bucket into the target bucket across regions according to the inter-bucket cross-region configuration instruction.

In this implementation, the cloud platform receives the inter-bucket cross-region configuration instruction inputted by the tenant, to replicate a data bucket across regions, thereby implementing redundancy.

In a possible implementation of the third aspect, the selecting a target data bucket from the first data bucket and the second data bucket based on working statuses of the first data bucket and the second data bucket includes: if the working status of one of the first data bucket and the second data bucket is abnormal, selecting, from the first data bucket and the second data bucket, a data bucket whose working status is normal as the target data bucket.

In a possible implementation of the third aspect, the selecting a target data bucket from the first data bucket and the second data bucket based on working statuses of the first data bucket and the second data bucket includes: selecting a data bucket specified by the tenant as the target data bucket, or selecting a data bucket that is physically nearest to the client as the target data bucket.

In this implementation, when determining that both the first and second data buckets work normally, the cloud platform may select a data bucket as the target data bucket according to a fixed rule.

In a possible implementation of the third aspect, the method further includes: obtaining a bucket access policy for the tenant, where the bucket access policy indicates the cloud platform to select the data bucket that is physically nearest to the client as the target data bucket or select the data bucket specified by the tenant as the target data bucket when determining that the working statuses of the first data bucket and the second data bucket are both normal.

In this implementation, the cloud platform provides the tenant with a representation portal, for the tenant to input a policy to determine which rule is preferentially used to select a data bucket as the target data bucket when both the first data bucket and the second data bucket work normally.

According to a fourth aspect, this application provides a cloud platform, including: a data bucket configuration module, configured to configure a first data bucket and a second data bucket for a tenant, where the first data bucket is set in a first region, the second data bucket is set in a second region, and a data object stored in the second data bucket is a cross-region backup of a data object stored in the first data bucket; an instruction receiving module, configured to receive a third data bucket creation instruction inputted by the tenant; an instruction processing module, configured to provide a domain name of a third data bucket to the tenant according to the third data bucket creation instruction; a data bucket selection module, configured to: receive an access request sent by a client for the domain name of the third data bucket, and select a target data bucket from the first data bucket and the second data bucket based on working statuses of the first data bucket and the second data bucket; and a sending module, configured to return an IP address of the target data bucket to the client.

Any one of the fourth aspect or the implementations of the fourth aspect is a method implementation corresponding to any one of the first aspect or the implementations of the first aspect. Descriptions in any one of the first aspect or the implementations of the first aspect are applicable to any one of the fourth aspect or the implementations of the fourth aspect. Details are not described herein again.

According to a fifth aspect, this application provides a cloud platform, including: an instruction receiving module, configured to receive a data bucket creation instruction inputted by a tenant, where the data bucket creation instruction indicates a first region and a second region; a data bucket configuration module, configured to: create a first data bucket in the first region, and create a second data bucket in the second region, where an object stored in the first data bucket is set as a cross-region backup of an object stored in the second data bucket; a domain name providing module, configured to provide the tenant with a domain name of a third data bucket; a data bucket selection module, configured to: receive an access request sent by a client for the domain name of the third data bucket, and select a target data bucket from the first data bucket and the second data bucket based on working statuses of the first data bucket and the second data bucket; and a sending module, configured to return an IP address of the target data bucket to the client.

Any one of the fifth aspect or the implementations of the fifth aspect is a method implementation corresponding to any one of the second aspect or the implementations of the second aspect. Descriptions in any one of the second aspect or the implementations of the second aspect are applicable to any one of the fifth aspect or the implementations of the fifth aspect. Details are not described herein again.

According to a sixth aspect, this application provides a cloud platform, including: a data bucket configuration module, configured to configure a first data bucket and a second data bucket for a tenant, where the first data bucket is set in a first region, the second data bucket is set in a second region, and a data object stored in the second data bucket is a cross-region backup of a data object stored in the first data bucket; a data bucket selection module, configured to: receive an access request sent by a client for a domain name of the first data bucket, and select a target data bucket from the first data bucket and the second data bucket based on working statuses of the first data bucket and the second data bucket; and a sending module, configured to return an IP address of the target data bucket to the client.

Any one of the sixth aspect or the implementations of the sixth aspect is a method implementation corresponding to any one of the third aspect or the implementations of the third aspect. Descriptions in any one of the third aspect or the implementations of the third aspect are applicable to any one of the sixth aspect or the implementations of the sixth aspect. Details are not described herein again.

According to a seventh aspect, this application provides a computer device. The computer device includes a processor and a memory. The memory is configured to store computer-executable instructions. The processor is configured to execute the computer-executable instructions stored in the memory, to enable the computer device to implement the method disclosed in any one of the first aspect or the possible implementations of the first aspect.

According to an eighth aspect, this application provides a computer storage medium, including computer-readable instructions. When the computer-readable instructions are executed, the method disclosed in any one of the first aspect or the possible implementations of the first aspect is implemented.

According to a ninth aspect, this application provides a computer program product including instructions. When the instructions are run on a computer, the computer is enabled to perform the method disclosed in any one of the first aspect or the possible implementations of the first aspect.

According to a tenth aspect, this application provides a computer device. The computer device includes a processor and a memory. The memory is configured to store computer-executable instructions. The processor is configured to execute the computer-executable instructions stored in the memory, to enable the computer device to implement the method disclosed in any one of the second aspect or the possible implementations of the second aspect.

According to an eleventh aspect, this application provides a computer storage medium, including computer-readable instructions. When the computer-readable instructions are executed, the method disclosed in any one of the second aspect or the possible implementations of the second aspect is implemented.

According to a twelfth aspect, this application provides a computer program product including instructions. When the instructions are run on a computer, the computer is enabled to perform the method disclosed in any one of the second aspect or the possible implementations of the second aspect.

According to a thirteenth aspect, this application provides a computer device. The computer device includes a processor and a memory. The memory is configured to store computer-executable instructions. The processor is configured to execute the computer-executable instructions stored in the memory, to enable the computer device to implement the method disclosed in any one of the third aspect or the possible implementations of the third aspect.

According to a fourteenth aspect, this application provides a computer storage medium, including computer-readable instructions. When the computer-readable instructions are executed, the method disclosed in any one of the third aspect and the possible implementations of the third aspect is implemented.

According to a fifteenth aspect, this application provides a computer program product including instructions. When the instructions are run on a computer, the computer is enabled to perform the method disclosed in any one of the third aspect or the possible implementations of the third aspect.

### BRIEF DESCRIPTION OF DRAWINGS

FIG. 1 is a schematic diagram of a logical architecture of an object storage service;
FIG. 2 is a schematic diagram of a system architecture of an object storage system;
FIG. 3 is a schematic diagram of an architecture of an object storage system set with a cross-region replication service according to an embodiment of the present invention;
FIG. 4 is a diagram of data interaction of an object storage system according to an embodiment of the present invention;
FIG. 5 is a flowchart of a bucket management method for a cloud platform according to an embodiment of the present invention;
FIG. 6a to FIG. 6i are schematic diagrams of a console configuration interface provided by a cloud platform according to an embodiment of the present invention;
FIG. 7 is another flowchart of a bucket management method for a cloud platform according to an embodiment of the present invention;
FIG. 8 is another schematic diagram of a console configuration interface provided by a cloud platform according to an embodiment of the present invention;
FIG. 9 is another flowchart of a bucket management method for a cloud platform according to an embodiment of the present invention;
FIG. 10 is another schematic diagram of a console configuration interface provided by a cloud platform according to an embodiment of the present invention;
FIG. 11 is a schematic diagram of connection of a data center in an object storage system according to an embodiment of the present invention;
FIG. 12 is a schematic diagram of a structure of a storage node according to an embodiment of the present invention;
FIG. 13 is a schematic diagram of a structure of another storage node according to an embodiment of the present invention.
FIG. 14 is a schematic diagram of an apparatus structure of a cloud platform according to an embodiment of the present invention;
FIG. 15 is another schematic diagram of an apparatus structure of a cloud platform according to an embodiment of the present invention;
FIG. 16 is another schematic diagram of an apparatus structure of a cloud platform according to an embodiment of the present invention; and
FIG. 17 is a schematic diagram of an apparatus structure of a computer device according to an embodiment of the present invention.

### DESCRIPTION OF EMBODIMENTS

The following describes the technical solutions in embodiments of the present invention with reference to the accompanying drawings in embodiments of the present invention. It is clear that the described embodiments are merely a part rather than all of embodiments of the present invention. All other embodiments obtained by a person of ordinary skill in the art based on embodiments of the present invention without creative efforts shall fall within the protection scope of the present invention.

To facilitate understanding of embodiments of this application, some terms in this application are first explained and described.

A cloud platform can provide pages related to public cloud services for tenants to remotely access the public cloud services. Tenants may log in to the cloud platform using a pre-registered account and password on a public cloud access page, and the tenants may select and purchase corresponding public cloud services such as OB S services, VM services, and container services on the public cloud access page after the login succeeds. For the OBS services, the tenants may further configure the OBS services through a configuration page or an application programming interface (Application Programming Interface, API) provided on the public cloud access page, for example, create buckets, configure an access policy for buckets, and upload objects from a local computer of the tenants to a bucket over the Internet, among other operations for a bucket.

A bucket (Bucket) is a container that stores objects in OBS. Object storage is a bucket- and object-based flat storage, and all objects in a bucket are at a same logical layer, eliminating a multi-level tree directory structure in a file system. Each bucket has its own attributes such as a storage class, an access permission, and a region. A tenant may create buckets with different storage classes and access permissions in different regions (which are described below in detail) and configure more advanced attributes to meet storage requirements in different scenarios.

In OBS, a bucket name is globally unique and cannot be changed. That is, a name of a bucket created by a tenant cannot be the same as a name of another bucket that has been created by the tenant and cannot be the same as a name of a bucket created by another tenant. Once a bucket is created, a region where the bucket resides cannot be changed, either. Once a bucket is created, a default bucket access ACL (Access Control List) is generated. Each item in the ACL list contains permissions such as read and write permissions granted to authorized tenants. Only authorized tenants can perform operations such as creating, deleting, viewing, and setting ACLs for a bucket.

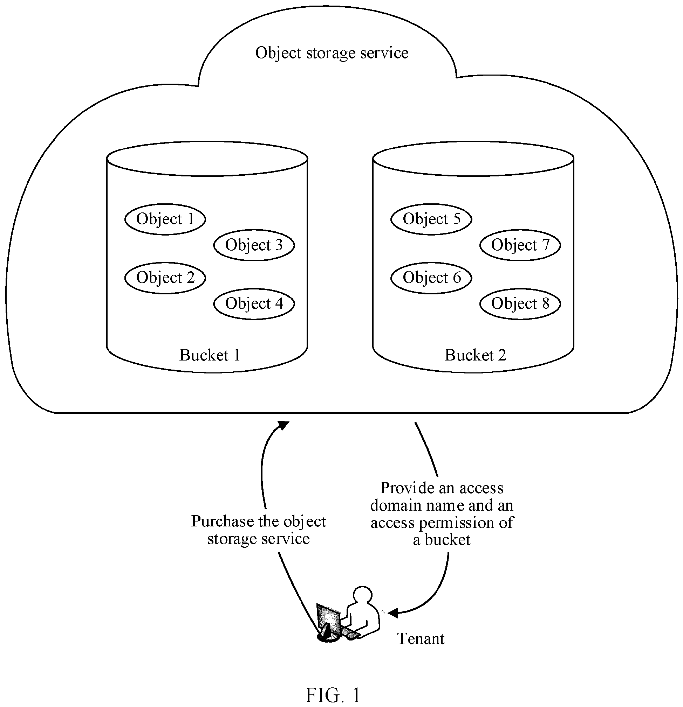

A tenant may log into the cloud platform with an account and may create a plurality of buckets via a configuration interface or an API on the public cloud access page provided by the cloud platform. A total quantity and a total size of objects stored in each bucket are unlimited, and therefore the tenant does not need to consider data scalability. OBS is a service based on the representational state transfer (Representational State Transfer) style, the hypertext transfer protocol (hypertext transport protocol, HTTP), and the hypertext transfer protocol secure (Hypertext Transfer Protocol Secure, HTTPS). The tenant may locate a bucket resource using a uniform resource locator (Uniform Resource Locator, URL, also referred to as a domain name in embodiments of the present invention). A relationship between a bucket and an object in OBS is shown in FIG. 1. FIG. 1 is a schematic diagram of a logical architecture of an object storage service. As shown in FIG. 1, each bucket may include a plurality of objects (described below in detail), and objects in one bucket are isolated from objects in another bucket. The tenant remotely purchases the object storage service by operating a client. The object storage service provides buckets to the client, and may specifically provide domain names of buckets. The tenant may operate the client to access a domain name, to upload data to the bucket, and download data from the bucket. The uploaded data is stored in the bucket as objects.

A static bucket is a bucket provided by the object storage service in embodiments of the present invention.

A dynamic bucket is a virtual bucket in embodiments of the present invention. A function of the dynamic bucket is to associate a plurality of static buckets. A domain name of the dynamic bucket is set for the dynamic bucket. After the client accesses the domain name of the dynamic bucket, the cloud platform may return an IP address of one of the plurality of static buckets to the client.

It should be noted that the static bucket and the dynamic bucket in the present invention may be referred to as data buckets. The static bucket and the dynamic bucket are specific implementations of data buckets. "Static" means that a data bucket is set in a physical storage device, for example, a physical disk described below, for storing objects. "Dynamic" means that a data bucket is not set in a physical storage device, for providing domain names for the client to access a domain name, so as to access, based on the domain name, objects stored in a corresponding static bucket, instead of storing objects. An object (Object) is a basic data storage unit of OBS, and is a combination of file data and related attribute information (metadata). Data uploaded by the tenant to OBS is stored as objects in buckets. An object consists of a key Key, metadata Metadata, and data Data. The key specifies a name of an object. For example, a key is a UTF-8 string up to 1024 characters long. Each object in a bucket has a unique key value. Metadata is information describing an object, including system metadata and tenant metadata. The metadata is uploaded to object storage service as key-value (Key-Value) pairs. The system metadata is automatically assigned by the object storage service and is used for processing object data. The system metadata includes a date Date, a content length Content-length, last modification time Last-modify, and content-MD5 Content-MD5. The tenant metadata is specified when the tenant uploads an object to a bucket, and is custom object description information. Data is data content uploaded by the tenant.

Generally, an object may be managed as a file. To facilitate data management by the tenant, the object storage service provides a method for simulating a folder by adding "/" to a name of the object, for example, "test/123.jpg". In this case, test is simulated as a folder, and 123.jpg is simulated as a file name in the folder "test". Essentially, an object name (Key) is "test/123.jpg", and data Data is a file 123.jpg.

When uploading an object, the tenant may specify a storage class for the object. If no storage class is specified, the object is stored in a same storage class as a bucket in which the object resides. After the object is uploaded, the storage class of the object may be changed, and the bucket may be accessed through a client. The client may be a browser locally used by the tenant or a dedicated client provided by the cloud platform. For example, the tenant may access the bucket through a browser set in a local computer. After an account is verified, the tenant may use the browser to upload an object to the bucket or delete an object from the bucket. The local computer is connected to the Internet.

Further, the client may be further set in a virtual machine, a container, or a bare metal server provided by a cloud service of a public cloud, and may access a bucket via an internal network of the public cloud.

It should be noted that any device that can access a bucket via the Internet or the internal network of the public cloud may be referred to as a client in embodiments of the present invention.

A region (Region) describes a geographic location of a data center. Tenants may create cloud resources provided by the cloud service of the public cloud in a specific region. When selecting a region, the tenants need to consider the following factors:
Geographical location: Generally, tenants who are going to create cloud resources are advised to select a region nearest to target tenants using the cloud resource, for lower network latency and quicker access speed. For example, regions in Chinese mainland include South China, North China, East China, Southwest China, and the like. For example, when a tenant selects South China, cloud resources (for example, static buckets in embodiments of the present invention) created by the tenant is set in a data center in South China. Further, a tenant who has services in an Asia-Pacific region other than Chinese mainland may select "AP-Hong Kong", "AP-Bangkok", or "AP-Singapore". A tenant who has services in Africa may select "South Africa-Johannesburg". A tenant who has services in Europe may select "EU-Paris".

Price: Prices of cloud resources vary in different regions.

In embodiments of the present invention, a tenant may create buckets in different regions, and upload objects to different buckets for multi-region backup, avoiding the case that objects in buckets in a data center in one region cannot be accessed due to power failure, network disconnection, or emergencies in the region.

An object storage device (Object Storage Device, OSD), which is a basic storage unit of an object storage system, is set on a physical disk and is specifically a storage space with a fixed size of the physical disk. The object storage system manages physical disks of a plurality of storage nodes in a form of OSDs.

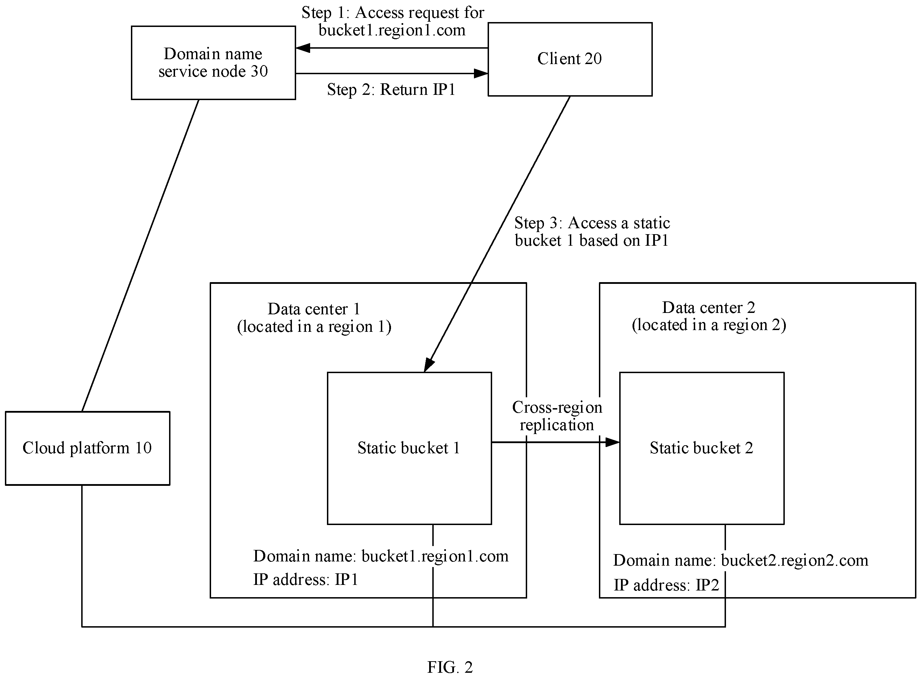

FIG. 2 is a schematic diagram of an architecture of an object storage system. In the embodiment shown in FIG. 2, the object storage system includes a data center 1 set in a region 1, a data center 2 set in a region 2, and a cloud platform 10. In this architecture, a tenant may pre-create a static bucket 1 and a static bucket 2 on the cloud platform 10. A static bucket 1 is set in the region 1, and a static bucket 2 is set in the region 2. A domain name of the static bucket 1 is bucket1.region1.com, and an IP address of the static bucket 1 is IP1. A domain name of the static bucket 2 is bucket2.region2.com, and an IP address of the static bucket 2 is IP2. The tenant may set replication of objects in the static bucket 1 to the static bucket 2 for backup across regions.

In the domain name bucket1.region1.com of the static bucket 1, bucket1 represents a bucket name of the static bucket 1, and region1 represents the region 1 in which the static bucket 1 resides. Similarly, in the domain name bucket2.region2.com of the static bucket 2, bucket2 represents a name of the static bucket 2, and region2 represents the region 2 in which the static bucket 2 resides.

Specifically, the cloud platform 10 registers a correspondence 1 between the domain name bucket1.region1.com and IP1 with a domain name service node 30 after the static bucket 1 is created, and registers a correspondence 2 between the domain name bucket2.region2.com and IP2 with the domain name service node 30 after the static bucket 2 is created.

Optionally, the domain name service node 30 may be jointly implemented by at least one top-level domain name service node and a plurality of second-level domain name service nodes set in different regions. In the foregoing domain name registration process, the top-level domain name service node records a correspondence between region1 and a second-level domain name service node 1 set in the region 1, and records a correspondence between region2 and a second-level domain name service node 2 set in the region 2. The second-level domain name service node 1 records a correspondence between bucket1 and IP1, and the second-level domain name service node 2 records a correspondence between bucket2 and IP2. The cloud platform 10 may be set in the data center 1 or the data center 2. The data center 1 and the data center 2 are data centers of a cloud service provider. Further, the cloud platform 10 may be set in another data center of the cloud service provider.

Based on the architecture shown in FIG. 2, a process in which a client 20 accesses the static bucket 1 is as follows:
Step 1: The client 20 sends an access request for the domain name bucket1.region1.com to the domain name service node 30.
Step 2: The domain name service node 30 obtains IP1 based on the correspondence 1, and sends IP1 to the client 20.

Optionally, if the domain name service node 30 is jointly implemented by at least one top-level domain name service node and a plurality of second-level domain name service nodes set in different regions, the top-level domain name service node sends the access request to a second-level domain name service node 1 based on the pre-recorded correspondence between region1 and the second-level domain name service node 1 set in the region 1, and the second-level domain name service node 1 sends IP1 to the client 20 based on the pre-recorded correspondence between bucket1 and IP1.

Step 3: The client 20 accesses the static bucket 1 based on IP1.

Specifically, the client 20 sends an access request for IP1 to the static bucket 1. For an IP packet, a destination address is IP1, a source address is an IP address of the client 20, and a payload (payload) carries a read/write request for the static bucket 1.

In this embodiment, if the static bucket 1 is faulty, the client 20 cannot access an object stored in the static bucket 1. Because an object stored in the static bucket 2 is a cross-region replication backup of the static bucket 1, as a redundancy solution, the client 20 can access an object stored in the static bucket 2, ensuring that the client 20 can still access a required object from the static bucket 2 when the static bucket 1 is faulty.

Specifically, the tenant may operate the client 20 to send an access request for the domain name bucket2.region2.com to the domain name service node 30. The domain name service node 30 obtains IP2 based on the correspondence 2, and sends IP2 to the client 20. The client accesses the static bucket 2 based on IP2.

Optionally, if the domain name service node 30 is jointly implemented by at least one top-level domain name service node and a plurality of second-level domain name service nodes set in different regions, the top-level domain name service node sends the access request to a second-level domain name service node 2 based on the pre-recorded correspondence between region2 and the second-level domain name service node 2 set in the region 2, and a second-level domain name service node 1 sends IP2 to the client 20 based on the pre-recorded correspondence between bucket2 and IP2.

In the foregoing solution, even if the static bucket 2 is set as a cross-region replication backup of the static bucket 1, when the static bucket 1 is faulty, for example, a power failure occurs in the data center 1, a storage node in which the static bucket 1 resides (which is described below in detail) breaks down or in other cases that normal operation of the static bucket 1 is affected, the tenant using the client 20 can apparently observe that data of the static bucket 1 cannot be accessed, for example, the client 20 freezes, and the tenant needs to reset the client 20 to send an access request for another domain name bucket2.region2.com. In this case, freezing of the client 20 may cause crash of an operating system on which the client 20 runs, and the tenant needs to manually set the client 20 and change in memorization a domain name to a to-be-accessed domain name (from bucket1.region1.com to bucket2.region2.com). As a result, tenant experience is poor.

For example, it is assumed that the client 20 is set on a shopping website's server. Shopping websites are set on the server. Log data of visiting the shopping websites by the tenant needs to be periodically sent to the static bucket 1 for storage as objects. Objects in the static bucket 1 are replicated into the static bucket 2 periodically or in real time for cross-region backup. When the static bucket 1 is faulty, the client 20 cannot send log data to the static bucket 1. In this case, the client 20 needs to send an access request for the domain name bucket2.region2.com, obtain IP2 of the static bucket 2 from the domain name service node 30, and access the static bucket 2 based on IP2.

Optionally, the client 20 may obtain IP2 of the static bucket 2 from the domain name service node 30 in advance. When the static bucket 1 is faulty, the client 20 can directly access the static bucket 2 by switching from IP1 to IP2, with no need to access the domain name service node 30 again.

Regardless of which manner is used, the client 20 always needs to pay attention to a working status of the static bucket 1, and switches to access the static bucket 2 when the working status of the static bucket 1 is abnormal. The foregoing operation is manually performed by the tenant, affecting user experience and normal running of the shopping websites due to arising delay.

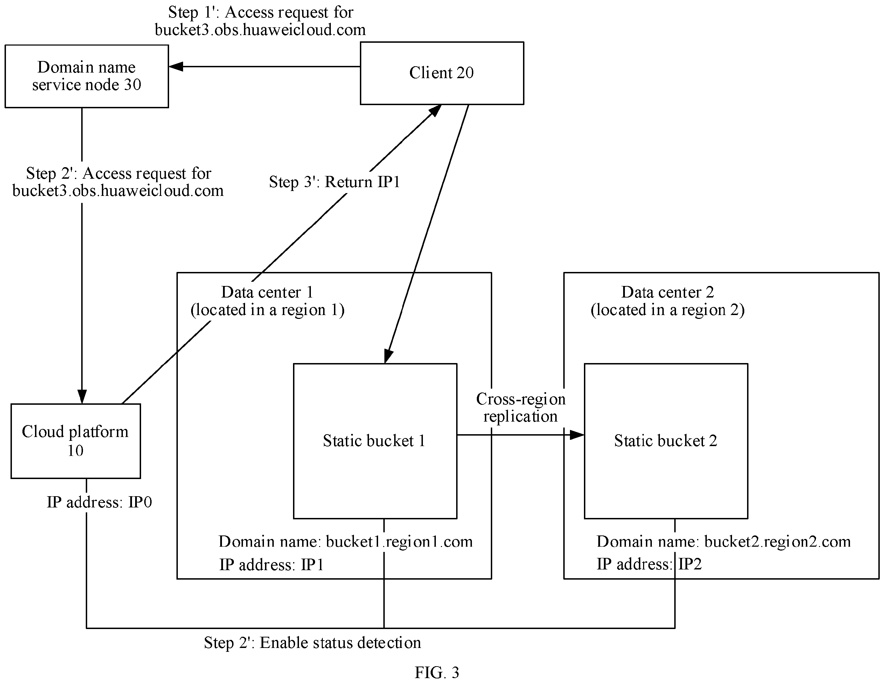

In view of the foregoing technical problem, an embodiment of the present invention provides an object storage system. For details, refer to FIG. 3. FIG. 3 is a schematic diagram of an architecture of an object storage system according to an embodiment of the present invention. Compared with the system shown in FIG. 2, a cloud platform 10 in FIG. 3 provides a dynamic bucket configuration interface, to create, based on a request of a tenant, a dynamic bucket set with a domain name (referred to as a domain name of a dynamic bucket, for example, bucket3.obs.huaweicloud.com). The dynamic bucket is set to be associated with a static bucket 1 and a static bucket 2 that are specified by the tenant. In addition, the cloud platform 10 registers a correspondence 3 between bucket3.obs.huaweicloud.com and an IP address IP0 of the cloud platform 10 with the domain name service node 30. The dynamic bucket is a virtual bucket, and a bucket name of the dynamic bucket and the domain name of the dynamic bucket are recorded in the cloud platform 10. The cloud platform 10 further records correspondences between bucket names of dynamic buckets and bucket names, regions, and IP addresses that are of the static bucket 1 and the static bucket 2. For example, the cloud platform 10 may record the correspondences in a tabular form, for example, Table 1:

| Bucket name of a dynamic bucket | Bucket name of a static bucket associated with the dynamic bucket | Region | IP address |
|---|---|---|---|
| buckets | bucket1 | Region 1 | IP1 |
| | bucket2 | Region 2 | IP2 |

It should be noted that the cloud platform 10 may record, in another manner, the correspondences between bucket names of dynamic buckets and bucket names, regions, and IP addresses that are of the static bucket 1 and the static bucket 2, which is not limited in embodiments of the present invention.

In addition, after creating the dynamic bucket, the cloud platform 10 enables status detection for the static bucket 1 and the static bucket 2.

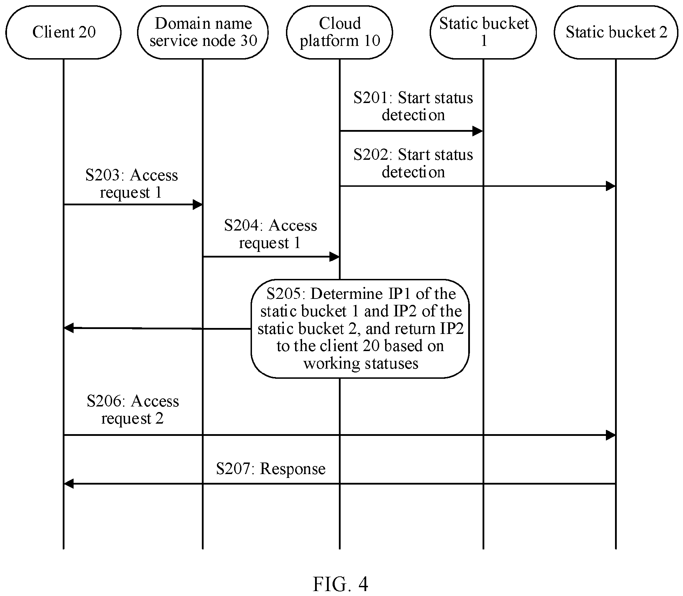

Specifically, a working process of the object storage system shown in FIG. 3 may be specifically described with reference to FIG. 4. FIG. 4 is a diagram of data interaction of the object storage system according to an embodiment of the present invention. In a method shown in FIG. 4, it is assumed that a tenant logs in to a cloud platform 10, creates a static bucket 1, a static bucket 2, and a dynamic bucket using the cloud platform 10, and configures the dynamic bucket to be associated with the static bucket 1 and the static bucket 2. As shown in FIG. 4, a working process of the object storage system is as follows:
Step S201: The cloud platform 10 starts status detection for the static bucket 1.

The cloud platform 10 periodically (for example, at intervals of 10 ms) sends a status detection request to the static bucket 1 (specifically, to a storage node in which the static bucket 1 resides, which is described below in detail). The cloud platform 10 determines that a status of the static bucket 1 is normal if receiving a response of the storage node in which the static bucket 1 resides, and determines that the static bucket 1 is faulty if receiving no response.

For example, the status detection request is, for example, a heartbeat message. The cloud platform 10 periodically sends the heartbeat message to the storage node in which the static bucket 1 resides. Each time the storage node receives a heartbeat message, the storage node returns a response message. When detecting a corresponding response message, the cloud platform 10 determines that the static bucket 1 is normal, and when detecting no corresponding response message, determines that the static bucket 1 is faulty (during actual application, a threshold may be set, and it is determined that the static bucket 1 is faulty only when response messages corresponding to a preset quantity of heartbeat messages are not detected).

Step S202: The cloud platform 10 starts status detection for the static bucket 2.

A detection manner of the static bucket 2 is similar to that in step S201, and details are not described herein again. In steps S201 and S202, the cloud platform records the working statuses of the static bucket 1 and the static bucket 2, and updates recorded working statuses based on a latest query result.

Step S203: The client 20 sends an access request 1 for the domain name bucket3.obs.huaweicloud.com of the dynamic bucket to the domain name service node 30.

In this step, the tenant may operate the client 20 to send the access request. The client 20 provides a user interaction interface, and receives, through the user interaction interface, the domain name of the dynamic bucket inputted by the tenant, to trigger the client 20 to start an action of sending the access request for the domain name of the dynamic bucket.

It should be noted that a source IP address of the access request is an IP address of the client 20, for example, 114.115.0.2.

Step S204: The domain name service node 30 forwards the access request 1 to the cloud platform 10.

Before this step, in a process of creating the dynamic bucket by the cloud platform 10, the domain name service node 30 registers the correspondence 3 between the IP address IP0 of the cloud platform 10 and the domain name bucket3.obs.huaweicloud.com of the dynamic bucket. When receiving the access request 1 for bucket3.obs.huaweicloud.com sent by the client 20, the domain name service node 30 determines IP0 based on the correspondence 3, and forwards the access request 1 to the cloud platform 10 corresponding to IP0.

Step S205: The cloud platform 10 determines IP1 of the static bucket 1 and IP2 of the static bucket 2, and returns IP2 to the client 20 according to a bucket access policy.

Specifically, the cloud platform 10 determines the dynamic bucket (whose bucket name is bucket3) based on the domain name bucket3.obs.huaweicloud.com of the dynamic bucket, determines, by querying Table 1, that the dynamic bucket is associated with the static bucket 1 and the static bucket 2, determines IP1 of the static bucket 1 and IP2 of the static bucket 2 from Table 1, selects, based on the working statuses of the static bucket 1 and the static bucket 2 that are recorded in steps S201 and S202, an IP address of a static bucket whose working status is normal, and returns the IP address to the client 20.

The cloud platform 10 determines the IP address of the client 20 based on the source IP address carried in the access request 1, and sends, to the IP address, a message carrying the IP address of the static bucket whose working status is normal.

For example, if the working status of the static bucket 1 is normal and the working status of the static bucket 2 is abnormal, the IP address IP1 of the static bucket 1 is selected as a target IP address and returned to the client 20.

If the working status of the static bucket 2 is normal and the working status of the static bucket 1 is abnormal, the IP address IP2 of the static bucket 2 is selected as the target IP address and returned to the client 20.

Further, when detecting that both the working status of the static bucket 1 and the working status of the static bucket 2 are normal, the cloud platform 10 preferentially selects the IP address IP1 of the static bucket 1 as the target IP address and returns the target IP address to the client 20.

If the cloud platform 10 detects that both the working status of the static bucket 1 and the working status of the static bucket 2 are normal, the IP address IP2 of the static bucket 2 is preferentially selected as the target IP address and returned to the client 20.

The foregoing solution can ensure that the client 20 can access, when a static bucket is faulty, another static bucket that is used as a backup of the static bucket. Even if a static bucket is faulty, the fault is transparent to the client 20, and does not affect a normal working status of the client 20.

In addition, when none of static buckets is faulty, which static bucket to be accessed may be selected by the tenant as required. Further, in a scenario in which one dynamic bucket is associated with more than two static buckets, the tenant may set a priority sequence for accessing the static buckets.

The cloud platform 10 may provide the tenant with an option or an input interface, and select, based on an input of the tenant, a static bucket whose an IP address is to be preferentially returned when no static bucket is faulty.

When detecting that both the working status of the static bucket 1 and the working status of the static bucket 2 are normal, the cloud platform 10 selects a target static bucket from the static bucket 1 and the static bucket 2, and returns an IP address of the target static bucket as the target IP address to the client 20. A region in which the target static bucket resides is a region of the region 1 and the region 2 that is physically nearer to the client 20.

For example, the cloud platform 10 may record a physical distance 1 between the region in which a preset IP address segment range is located and the region 1 and a physical distance 2 between the region in which the preset IP address segment range is located and the region 2. When determining that the IP address of the client 20 (the IP address is carried in the source IP address of the access request 1 in step S203) falls within the preset IP address segment range, the cloud platform 10 selects, from the static bucket 1 and the static bucket 2 as the target static bucket, a static bucket residing in a region corresponding to a smaller value of the physical distance 1 and the physical distance 2.

Further, reference may be made to the following Table 2:

| IP address range of clients | Physical distance to the region 1 (measured in, for example, km) | Physical distance to the region 2 (measured in, for example, km) |
|---|---|---|
| 114.115.0.0/16 | 18 | 7 |
| 17.23.0.0/16 | 10 | 23 |

The cloud platform 10 pre-records Table 2, analyzes that an IP address 114.115.0.2 of the client 20 falls within the range segment 114.115.0.0/16, and obtains a physical distance of 18 from the range segment to the region 1 and a physical distance of 7 from the range segment to the region 2. The cloud platform 10 determines, by comparing 18 with 7, that a physical distance from the client 20 to the region 2 is shorter, uses the static bucket 2 as the target static bucket, and returns IP2 of the static bucket 2 to the client 20. In this way, the client 20 can access the nearest static bucket 2 in the region 2, which shortens a network transmission time and improves tenant experience.

The foregoing solution can ensure that a physical distance between a client and a to-be-accessed static bucket is shortest when no static bucket is faulty, shortening a network transmission distance.

The cloud platform 10 may provide the tenant with an option or an input interface, and select, based on an input of the tenant, to preferentially return an IP address of a static bucket having the shortest distance to the client 20 when no static bucket is faulty.

In this step, it is assumed that the working status of the static bucket 1 is abnormal and the working status of the static bucket 2 is normal. In this case, the cloud platform 10 returns the IP address IP2 of the static bucket 2 to the client 20.

Step S206: The client 20 sends an access request 2 to the static bucket 2.

In step S205, the client 20 obtains IP2 of the static bucket 2 from the cloud platform 10, and the client 20 sends the access request 2 for IP2 to the static bucket 2.

A destination IP address of the access request 2 is IP2, and the access request 2 may carry, for example, to-be-uploaded data or a data download instruction.

Step S207: The static bucket 2 returns a response based on the access request 2. When the access request 1 carries to-be-uploaded data, the static bucket 2 receives and stores the to-be-uploaded data of the client 20. When the access request for a bucket carries the data download instruction, the static bucket 2 sends, to the client 20, an object specified by the data download instruction.

It should be noted that, for ease of description, in this step, the static bucket 2 as an entity returns a response to the client 20. During actual application, a storage node in which the static bucket 2 resides as the entity essentially returns a response to the client 20. A relationship between a storage node and a static bucket is described below in detail.

In the foregoing embodiment, it is assumed that the static bucket 1, the static bucket 2, and the dynamic bucket are all set in the cloud platform 10. The system disclosed in the foregoing embodiment runs based on the specified static bucket 1, static bucket 2, and dynamic bucket, allowing the client to obtain an IP address of an appropriate static bucket merely by accessing the domain name of the dynamic bucket. However, in embodiments of the present invention, the cloud platform 10 is open to the tenant to create and configure all the static bucket 1, the static bucket 2, and the dynamic bucket, allowing the tenant to manage static buckets as required. A configuration process is described below in detail.

### Bucket management method

To more clearly describe the bucket management method implemented by the cloud platform 10, refer to Embodiment 1.

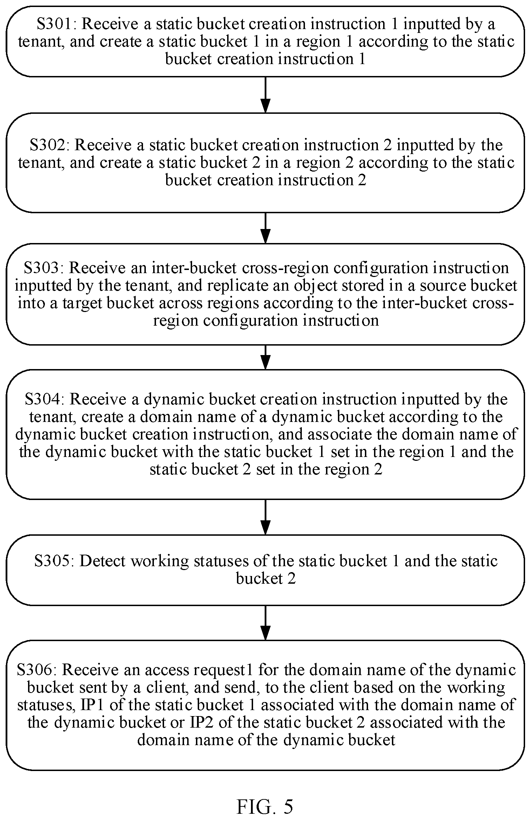

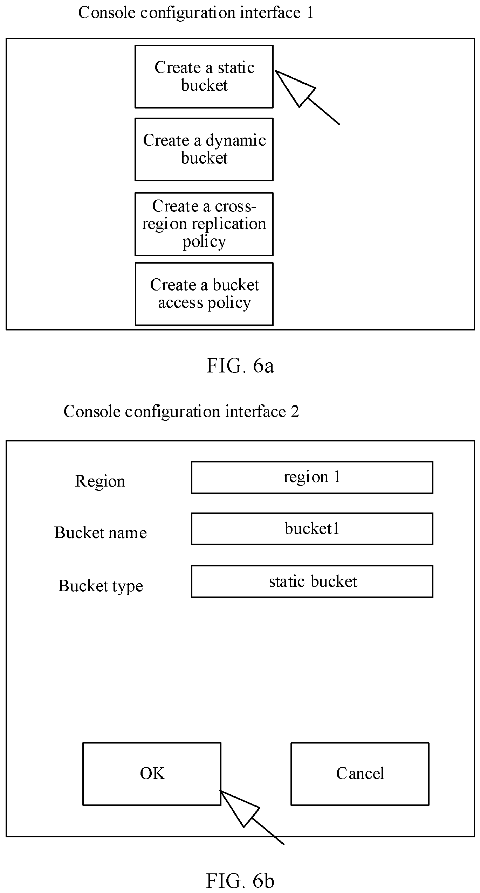

For details, refer to FIG. 5 and FIG. 6a to FIG. 6i. FIG. 5 is a flowchart of a bucket management method of a cloud platform according to an embodiment of the present invention. FIG. 6a to FIG. 6i are schematic diagrams of a console configuration interface provided by a cloud platform according to an embodiment of the present invention. As shown in FIG. 5, the method includes the following steps.

Step S301: Receive a static bucket creation instruction 1 inputted by a tenant, and create a static bucket 1 in a region 1 according to the static bucket creation instruction 1.

For example, the cloud platform 10 may receive, through a configuration interface or an API, the static bucket creation instruction 1 inputted by the tenant. The static bucket creation instruction indicates the region 1 and a bucket name bucket1 that are specified by the tenant. The cloud platform 10 creates the static bucket 1 in the region 1 according to the static bucket creation instruction 1.

In this embodiment, an implementation of a configuration interface is used for detailed description.

Refer to FIG. 6a. As shown in FIG. 6a, the cloud platform 10 provides a console configuration interface 1. When the tenant selects a "Create a static bucket" option on the console configuration interface 1, the cloud platform 10 provides a console configuration interface 2 shown in FIG. 6b. The tenant inputs a name "bucket1" of a static bucket to be created, inputs a bucket type "static bucket", inputs a region "region 1" of the static bucket, and clicks an "OK" option. In this case, the cloud platform 10 creates the static bucket 1 with a bucket name "bucket1" in the data center 1 (as shown in FIG. 2) in the region 1 according to the static bucket creation instruction inputted by the tenant. Correspondingly, the cloud platform 10 configures a domain name bucket1.region1.com and IP1 for the static bucket 1.

Further, after creating the static bucket 1, the tenant uploads an object to the static bucket 1. The object is data uploaded by the tenant.

Step S302: Receive a static bucket creation instruction 2 inputted by the tenant, and create a static bucket 2 in a region 2 according to the static bucket creation instruction 2.

For example, the cloud platform 10 may receive, through a configuration interface or an API, the static bucket creation instruction 2 inputted by the tenant. The static bucket creation instruction 2 indicates the region 2 and a bucket name bucket2 that are specified by the tenant. The cloud platform 10 creates the static bucket 2 in the region 2 according to the static bucket creation instruction 2.

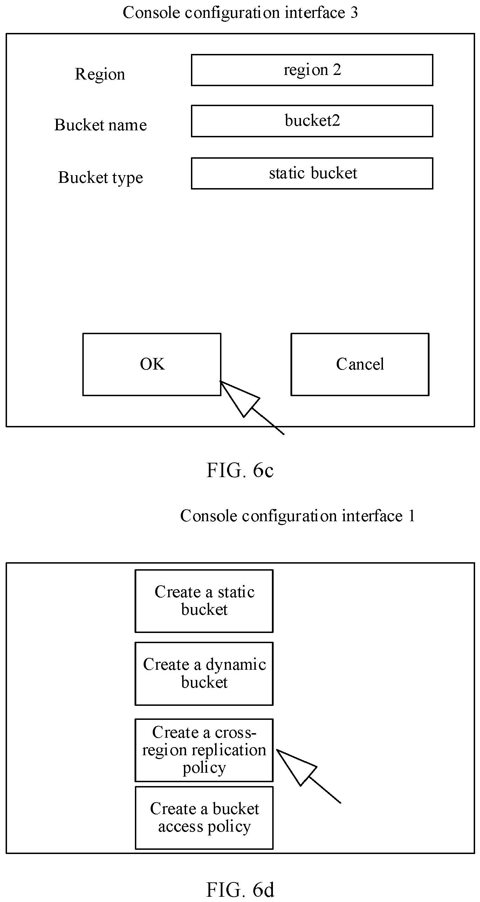

Similarly, the tenant may create the static bucket 2 on a console configuration interface 3 shown in FIG. 6c. The cloud platform 10 creates the static bucket 2 with a bucket name "bucket2" in the data center 2 (as shown in FIG. 2) in the region 2 according to the static bucket creation instruction 2 inputted by the tenant. Correspondingly, the cloud platform 10 configures a domain name bucket2.region2.com and IP2 for the static bucket 2.

Further, in a process of creating a static bucket, the cloud platform 10 may register a correspondence 1 between bucket 1. region 1. com and IP1 and a correspondence 2 between bucket2.region2.com and IP2 with the domain name service node 30 shown in FIG. 2.

In steps S301 and S302, the cloud platform 10 configures the static bucket 1 and the static bucket 2 for the tenant.

Step S303: The cloud platform 10 receives an inter-bucket cross-region configuration instruction inputted by the tenant, and replicates an object stored in a source bucket into a target bucket across regions according to the inter-bucket cross-region configuration instruction.

The cloud platform 10 may receive, through a configuration interface or an API, the inter-bucket cross-region configuration instruction inputted by the tenant. The inter-bucket cross-region configuration instruction indicates that the static bucket 1 is used as the source bucket and the static bucket 2 is used as the target bucket.

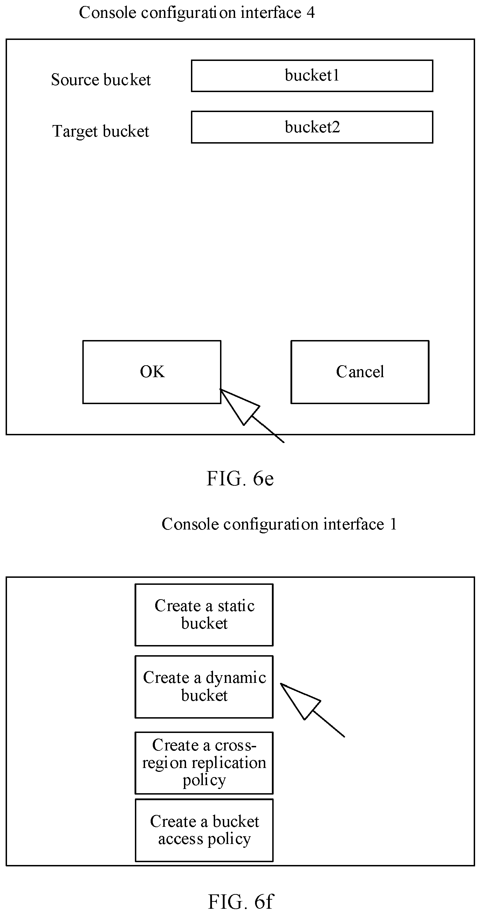

For example, when the tenant selects a "Create a cross-region replication policy" option on the console configuration interface 1, the cloud platform 10 provides a console configuration interface 4 shown in FIG. 6e. The tenant inputs the name "bucket1" of the static bucket 1 into a "Source bucket" option on the console configuration interface 4, inputs the name "bucket2" of the static bucket 2 into a "Target bucket" option on the console configuration interface 4, and clicks an "OK" option. In this case, the cloud platform 10 periodically replicates objects in the static bucket 1 into the static bucket 2 at preset intervals across regions, so that objects stored in the static bucket 1 are identical with those stored in the static bucket 2.

Each time a new object is uploaded to the static bucket 1 or an object is modified, the new object or the modified object may be synchronously stored in the static bucket 2 by the cloud platform 10.

Step S304: The cloud platform 10 receives a dynamic bucket creation instruction inputted by the tenant, creates a domain name of a dynamic bucket according to the dynamic bucket creation instruction, and associates the domain name of the dynamic bucket with the static bucket 1 set in the region 1 and the static bucket 2 set in the region 2.

The cloud platform 10 may receive, through a configuration interface or an API, the dynamic bucket creation instruction inputted by the tenant. The dynamic bucket creation instruction indicates the cloud platform 10 to create a dynamic bucket set with a domain name of the dynamic bucket, and associate the domain name of the dynamic bucket with the static bucket 1 set in the region 1 and the static bucket 2 set in the region 2.

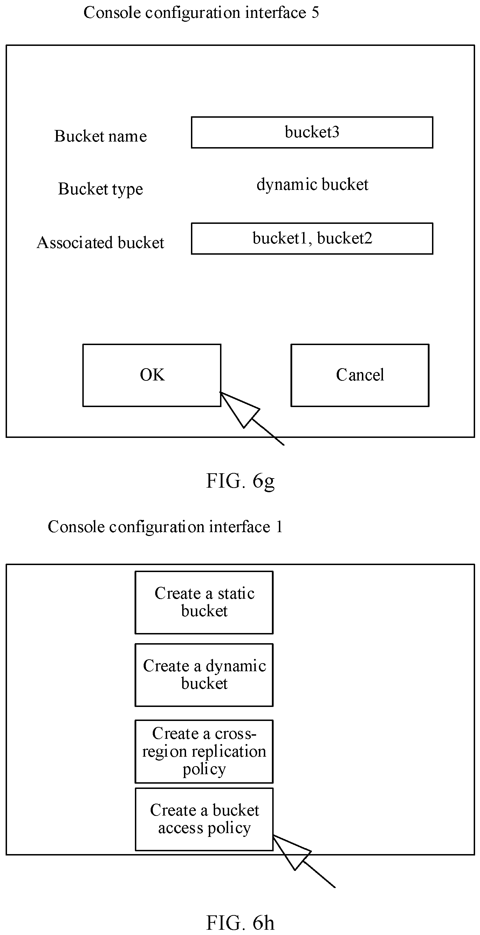

For example, refer to a console configuration interface 5 shown in FIG. 6g. The tenant inputs a bucket name "bucket3" of a dynamic bucket, inputs and sets the name "bucket1" of the static bucket 1 and the name "bucket2" of the static bucket 2 that are associated with the dynamic bucket in an "Associated bucket" input box, and clicks an "OK" option, to complete creation of the dynamic bucket.

Optionally, the dynamic bucket creation instruction may further specify whether a client preferentially accesses the static bucket 1 or the static bucket 2 if working statuses of the static bucket 1 and the static bucket 2 are both normal, or may further specify that the client selects, based on distances between the static buckets and the client, a static bucket with a shorter distance to access.

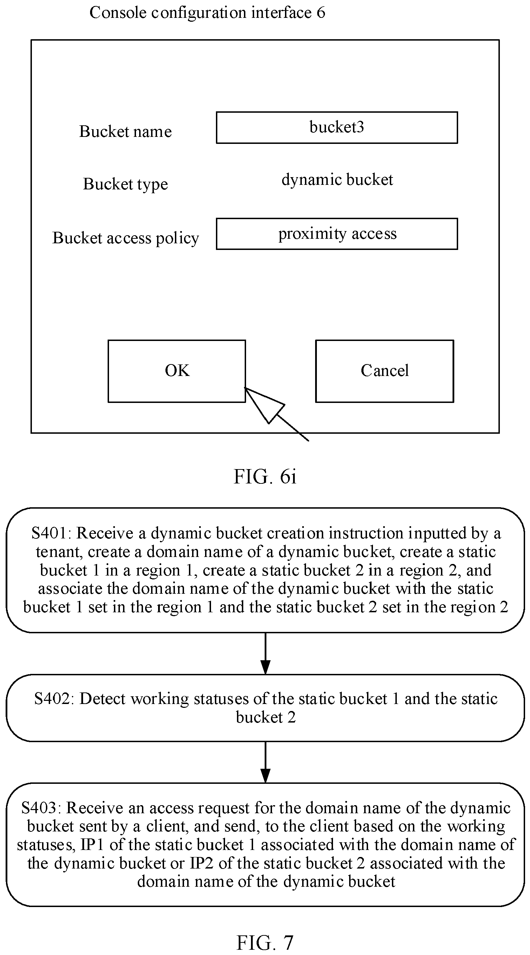

Specifically, with reference to the console configuration interface 1 shown in FIG. 6h, after the tenant clicks a "Create a bucket access policy" option, the cloud platform 10 provides a console configuration interface 6 shown in FIG. 6i. The tenant inputs a name "bucket3" of a dynamic bucket in a "Bucket name" input box on the interface, and selects a "Proximity policy" option in a bucket access policy input box, to complete policy configuration.

It should be noted that, the interface shown in FIG. 6i does not show other options, for example, preferentially accessing bucket1 or preferentially accessing bucket2. These options are also provided for the tenant in a bucket access policy.

Step S305: The cloud platform 10 detects the working statuses of the static bucket 1 and the static bucket 2.

The cloud platform 10 may periodically detect the working statuses of the static bucket 1 and the static bucket 2, record the working statuses of the static bucket 1 and the static bucket 2, and periodically update the recorded working statuses.

Step S306: The cloud platform 10 receives an access request 1 for the domain name of the dynamic bucket sent by the client, and sends, to the client based on the working statuses, IP 1 of the static bucket 1 associated with the domain name of the dynamic bucket or IP2 of the static bucket 2 associated with the domain name of the dynamic bucket.

For example, the cloud platform 10 determines, based on the access request 1, IP1 and IP2 (as shown in FIG. 3 and the corresponding embodiment) associated with the dynamic bucket. If the working status of one of the static bucket 1 and the static bucket 2 is abnormal, the cloud platform 10 sends, to the client 20, an IP address of a static bucket whose working status is normal and that is selected from the static bucket 1 and the static bucket 2.

When the dynamic bucket creation instruction further includes the bucket access policy selected or inputted by the tenant, the cloud platform 10 sends, to the client 20 when determining that the working statuses of the static bucket 1 and the static bucket 2 are both normal, the IP address of the static bucket 1 or the static bucket 2 specified by the tenant.

Optionally, when the bucket access policy is "proximity policy", the cloud platform sends, to the client 20, an IP address of a static bucket that is physically nearer to the client when determining that the working statuses of the static bucket 1 and the static bucket 2 are both normal.

In summary, the cloud platform 10 in embodiments of the present invention provides an input interface, for example, a configuration interface or an API, for a tenant to manage buckets, to satisfy a requirement of the tenant for implementing a cross-region backup of data in the bucket as required. In addition, the tenant may create a dynamic bucket to manage the dynamic bucket and at least two static buckets. A client can address an appropriate static bucket merely by accessing a domain name of a dynamic bucket, to access data to be accessed, with no need to know whether a working status of a static bucket is normal. The cloud platform 10 detects working statuses of static buckets, and the tenant does not need to concern about a static bucket whose working status is abnormal, providing more convenience for the tenant.

In Embodiment 1, the tenant separately creates a static bucket and a dynamic bucket, and the tenant sets an association between the dynamic bucket and the static bucket. However, in another implementation of the bucket management method, different from that a static bucket needs to be created in Embodiment 1, the tenant directly creates a dynamic bucket on the cloud platform 10 and specifies at least two regions, instead of creating a static bucket on the cloud platform 10 first. The cloud platform 10 may create a plurality of static buckets associated with the dynamic bucket in the background and set a domain name of the dynamic bucket, with no need to set domain names for the static buckets.

To describe the bucket management method implemented by the cloud platform 10 more clearly, refer to Embodiment 2:
FIG. 7 is another flowchart of a bucket management method according to an embodiment of the present invention. As shown in FIG. 7, the method includes the following steps.

S401: A cloud platform 10 receives a dynamic bucket creation instruction inputted by a tenant, where the dynamic bucket creation instructions are used to specify a name buckets of a dynamic bucket and associated regions of the dynamic bucket, for example, a region 1 and a region 2. According to the dynamic bucket creation instruction, the cloud platform 10 creates a domain name bucket3.obs.huaweicloud.com of the dynamic bucket, creates a static bucket 1 in the region 1, creates a static bucket 2 in the region 2, and associates the domain name bucket3.obs.huaweicloud.com of the dynamic bucket with the static bucket 1 set in the region 1 and the static bucket 2 set in the region 2. The static bucket 2 is set as a cross-region backup bucket of the static bucket 1 by the cloud platform 10. That is, an object stored in the static bucket 2 is a cross-region backup of an object stored in the static bucket 1.

Each time a new object is uploaded to the static bucket 1 or an object is modified, the new object or the modified object may be synchronously stored in the static bucket 2 by the cloud platform.

In addition, the cloud platform 10 registers a correspondence between bucket3.obs.huaweicloud.com and IP0 of the cloud platform with a domain name service node 30.

During the creation of the static bucket 1, the cloud platform 10 sets IP1 for the static bucket 1 and does not set the domain name of the static bucket. During the creation of the static bucket 2, the cloud platform 10 sets IP2 for the static bucket 2 but does not set the domain name of the static bucket.

S402: The cloud platform 10 detects working statuses of the static bucket 1 and the static bucket 2.

This step is similar to that in Embodiment 1, and details are not described herein again.

S403: The cloud platform 10 receives an access request for the domain name of the dynamic bucket sent by a client 20, and sends, based on the working statuses, IP1 of the static bucket 1 associated with the domain name of the dynamic bucket or IP2 of the static bucket 2 associated with the domain name of the dynamic bucket to the client.

In this step, the client 20 sends the access request for the domain name bucket3.obs.huaweicloud.com of the dynamic bucket to the domain name service node 30. The domain name service node 30 forwards the access request to the cloud platform 10 based on a correspondence between bucket3.obs.huaweicloud.com and IP0 of the cloud platform. The cloud platform 10 determines IP1 of the static bucket 1 and IP2 of the static bucket 2 based on the domain name bucket3.obs.huaweicloud.com of the dynamic bucket.

When it is determined that the working status of one of the static bucket 1 and the static bucket 2 is abnormal, the cloud platform 10 sends, to the client 20, an IP address of a static bucket whose working status is normal that is selected from the static bucket 1 and the static bucket 2. When it is determined that the working statuses of the static bucket 1 and the static bucket 2 are both normal, the cloud platform 10 sends an IP address of the static bucket 1 or the static bucket 2 to the client 20.

Optionally, in Embodiment 2, if it is determined that the working statuses of the static bucket 1 and the static bucket 2 are both normal, the cloud platform 10 may randomly send the IP address of the static bucket 1 or the static bucket 2 to the client 20.

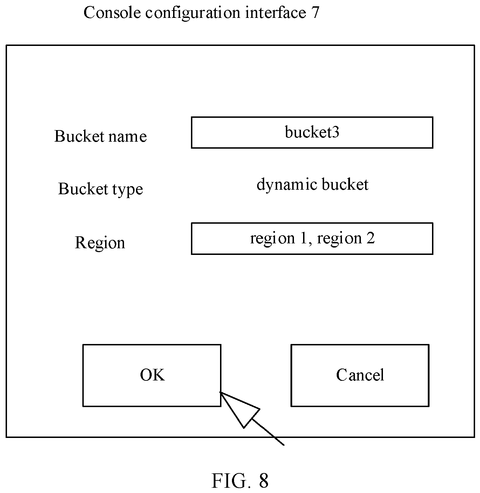

In this embodiment, the cloud platform 10 may receive, through a configuration interface or an API, a dynamic bucket creation instruction inputted by the tenant. The dynamic bucket instruction further indicates the region 1 or the region 2 selected by the tenant. The configuration interface is used as an example. Refer to FIG. 8 together. In this embodiment, after the tenant clicks the "Create a dynamic bucket" option in FIG. 6f, the cloud platform 10 provides a console configuration interface 7 shown in FIG. 8. After inputting a name of a to-be-created dynamic bucket, the tenant may further select or input a plurality of regions such as the region 1 and the region 2, and then click "OK". The cloud platform 10 creates the static bucket 1 in the region 1 and the static bucket 2 in the region 2 according to the dynamic bucket creation instruction. IP1 and IP2 are respectively set for the static bucket 1 and the static bucket 2. However, domain names of the static buckets do not need to be set. In addition, the cloud platform 10 only needs to register a correspondence between the domain name of the dynamic bucket and IP0 of the cloud platform in the domain name service node 30.

In Embodiment 1 and Embodiment 2, the tenant needs to create a dynamic bucket on the cloud platform 10, to obtain the domain name of the dynamic bucket. However, in some other scenarios, if the tenant has already created the static bucket 1, the client 20 has set the domain name for fixedly accessing the static bucket 1, and the tenant does not want to change an access domain name of the client 20, the solution in Embodiment 3 of the bucket management method described below may be used. In Embodiment 3, the tenant does not need to create the static bucket1 and only needs to create the static bucket 2, and inputs an inter-bucket cross-region replication instruction into the cloud platform 10. In this case, the cloud platform 10 replicates an object of the static bucket 1 into the static bucket 2 based on the inter-bucket cross-region replication instruction, detects the working statuses of the static bucket 1 and the static bucket 2, and returns the IP address of the static bucket 1 or the static bucket 2 to the client 20 based on the working statuses. Embodiment 3 is applicable to a scenario in which a tenant does not want to change a domain name of an existing static bucket to a domain name of a dynamic bucket.

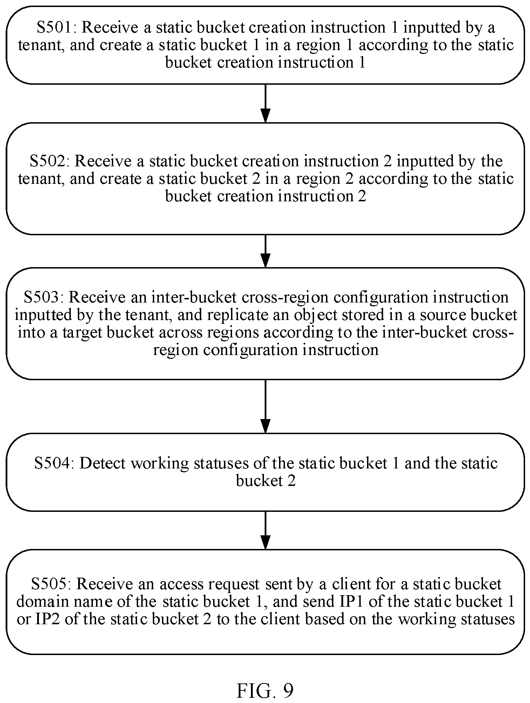

For details, refer to FIG. 9. FIG. 9 is another flowchart of a bucket management method according to an embodiment of the present invention. As shown in FIG. 9, the method includes the following steps.

Step S501: A cloud platform 10 receives a static bucket creation instruction 1 inputted by a tenant, and creates a static bucket 1 in a region 1 according to the static bucket creation instruction 1, where the static bucket creation instruction 1 indicates the region 1 and a bucket name bucket1 that are specified by the tenant. The bucket name bucket1 and a domain name bucket 1. region1. com and IP1 of the static bucket are set for the static bucket 1.

The cloud platform 10 registers a correspondence 1 between the domain name bucket1.region1.com and IP1 of the static bucket with a domain name service node 30.

For example, the cloud platform 10 may receive, through a configuration interface or an API, the static bucket creation instruction 1 inputted by the tenant. The static bucket creation instruction indicates the region 1 specified by the tenant. The cloud platform 10 creates the static bucket 1 in the region 1 according to the static bucket creation instruction 1.

In this embodiment, an implementation of a configuration interface is used for detailed description.

With reference to FIG. 6a, as shown in FIG. 6a, the cloud platform 10 provides a console configuration interface 1. When the tenant selects a "Create a static bucket" option on the console configuration interface 1, the cloud platform 10 provides a console configuration interface 2 shown in FIG. 6b. The tenant inputs a name "bucket1" of a static bucket to be created, inputs a bucket type "static bucket", inputs a region "region 1" of the static bucket, and clicks an "OK" option. In this case, the cloud platform 10 creates the static bucket 1 with a bucket name "bucket1" in the data center 1 (as shown in FIG. 2) in the region 1 according to the static bucket creation instruction inputted by the tenant. Correspondingly, the cloud platform 10 configures a domain name bucket1.region1.com and IP1 for the static bucket 1.

The cloud platform 10 may register the correspondence 1 between bucket1.region1.com and IP1 with the domain name service node 30 shown in FIG. 2.

In addition, after creating the static bucket 1, the tenant uploads an object to the static bucket 1, so that the static bucket 1 stores the object. In addition, the cloud platform 10 may provide the tenant with an upload interface. Details are not described herein.

Step S502: The cloud platform 10 receives a static bucket creation instruction 2 inputted by the tenant, and creates a static bucket 2 in a region 2 according to the static bucket creation instruction 2. The static bucket creation instruction 2 indicates the region 2 and a bucket name bucket2 that are specified by the tenant. The bucket name bucket2 and a domain name bucket2.region2.com and IP2 of the static bucket are set for the static bucket 2.

For example, the cloud platform 10 may receive, through a configuration interface or an API, the static bucket creation instruction 2 inputted by the tenant. The static bucket creation instruction 2 indicates the region 2 and a bucket name bucket2 that are specified by the tenant. The cloud platform 10 creates the static bucket 2 in the region 2 according to the static bucket creation instruction 2.

Similarly, the tenant may create the static bucket 2 on a console configuration interface 3 shown in FIG. 6c. The cloud platform 10 creates the static bucket 2 with a bucket name "bucket2" in the data center 2 (as shown in FIG. 2) in the region 2 according to the static bucket creation instruction 2 inputted by the tenant. Correspondingly, the cloud platform 10 configures a domain name bucket2.region2.com and IP2 for the static bucket 2.

Further, in a process of creating a static bucket, the cloud platform 10 may register a correspondence 2 between bucket2.region2.com and IP2 with the domain name service node 30 shown in FIG. 2.

Step S503: The cloud platform 10 receives an inter-bucket cross-region configuration instruction inputted by the tenant, where the inter-bucket cross-region configuration instruction indicates that the static bucket 1 is a source bucket and the static bucket 2 is a target bucket, and the cloud platform 10 replicates an object stored in the source bucket into the target bucket across regions according to the inter-bucket cross-region configuration instruction.

Each time a new object is uploaded to the static bucket 1 or an object is modified, the new object or the modified object may be synchronously stored in the static bucket 2 by the cloud platform.

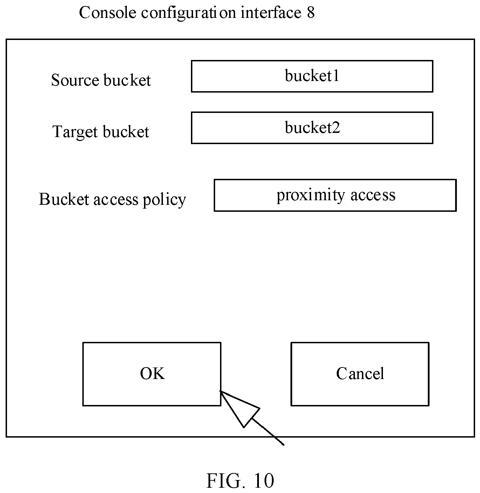

The cloud platform 10 may receive, through a configuration interface or an API, the inter-bucket cross-region configuration instruction inputted by the tenant. For example, after the tenant clicks a "Create a cross-region replication policy" option shown in FIG. 6d, the cloud platform 10 provides a console configuration interface 8 shown in FIG. 10, and the tenant may input a bucket name of the source bucket and a bucket name of the target bucket on the console configuration interface 8.

Optionally, the inter-bucket cross-region configuration instruction further includes a bucket access policy for the tenant, and the bucket access policy indicates the cloud platform 10 to send, to a client 20 when it is determined that the working statuses of the static bucket 1 and the static bucket 2 are both normal, an IP address of the static bucket 1 or the static bucket 2 specified by the tenant, or indicates the cloud platform 10 to send, to a client 20 when it is determined that working statuses of the static bucket 1 and the static bucket 2 are both normal, an IP address of a static bucket that is physically nearer to the client 20.

As shown in FIG. 10, a "Bucket access policy" configuration item may be provided on the console configuration interface 8. The tenant may input or select a "proximity access" policy in the configuration item, to indicate the cloud platform 10 to send, to the client 20 when it is determined that the working statuses of the static bucket 1 and the static bucket 2 are both normal, an IP address of a static bucket that is physically nearer to the client 20.

Alternatively, bucket1 is directly inputted into the configuration item, and the cloud platform 10 is indicated to send the IP address of the static bucket 1 to the client 20 when it is determined that the working statuses of the static bucket 1 and the static bucket 2 are both normal. Similarly, bucket2 may be inputted into the configuration item, and the cloud platform 10 is indicated to send the IP address of the static bucket 2 to the client 20 when it is determined that the working statuses of the static bucket 1 and the static bucket 2 are both normal.

In addition, the cloud platform 10 further deletes, from the domain name service node 30 shown in FIG. 3 according to the inter-bucket cross-region configuration instruction, the correspondence 1 between bucket 1. region 1. com and IP1, and reregisters a correspondence 4 between bucket1.region1.com and IP0 of the cloud platform.

Step S504: The cloud platform 10 detects the working statuses of the static bucket 1 and the static bucket 2.

Step S505: The cloud platform 10 receives an access request sent by the client 20 for the static bucket domain name bucket1.region1.com of the static bucket 1, and sends IP1 of the static bucket 1 or IP2 of the static bucket 2 to the client based on the working statuses.

In this step, the client 20 sends the access request for the static bucket domain name bucket1.region1.com of the static bucket 1 to the domain name service node 30. The domain name service node 30 forwards the access request to the cloud platform 10 based on a correspondence 4 between bucket 1. region 1. com and IP0 of the cloud platform.

If the working status of one of the static bucket 1 and the static bucket 2 is abnormal, the cloud platform 10 sends, to the client 20, an IP address of a static bucket whose working status is normal that is selected from the static bucket 1 and the static bucket 2.

If it is determined that the working statuses of the static bucket 1 and the static bucket 2 are both normal, the cloud platform 10 sends the IP address of the static bucket 1 or the static bucket 2 to the client 20.

Optionally, if the inter-bucket cross-region configuration instruction further includes the bucket access policy for the tenant, the cloud platform 10 sends, to the client 20 according to the bucket access policy, the IP address of the static bucket 1 or the static bucket 2 specified by the tenant according to the bucket access policy; or sends, to the client 20 according to the bucket access policy, an IP address of a static bucket that is physically nearer to the client 20.

Therefore, in Embodiment 3, the client 20 does not need to change the domain name bucket1.region1.com to be accessed, and the tenant merely needs to create the static bucket 2 on the cloud platform 10 and input the inter-bucket cross-region configuration instruction into the cloud platform 10, to forward, to the cloud platform 10, the access request sent by the client 20 for bucket1.region1.com, and the cloud platform 10 returns an appropriate IP address to the client based on the working statuses of the static bucket 1 and the static bucket 2. Embodiment 3 is particularly applicable to the scenario in which a tenant does not want to change a domain name of an existing static bucket to a domain name of a dynamic bucket on the client 20.

It should be noted that, in embodiments of the present invention, the client 20 is not necessarily operated by the tenant, and may be operated by another person. However, in this case, a token authorized by the tenant is set on the client 20.

Further, in another embodiment of the present invention, the domain name of the static bucket does not need to include an identifier of a region in which the static bucket resides. For example, the domain name bucket1.region1.com of the static bucket 1 includes an identifier region1 of the region 1. Optionally, the domain name of the static bucket 1 may be, for example, bucket1.obs.huawei.com, whose format is similar to the domain name of the dynamic bucket, which is not limited in embodiments of the present invention.

Further, the "static bucket creation instruction" and the "dynamic bucket creation instruction" in embodiments of the present invention are both specific implementations of a "data bucket creation instruction".

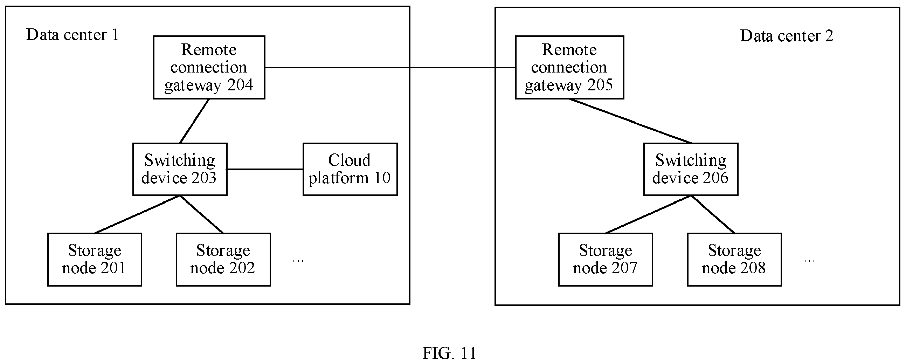

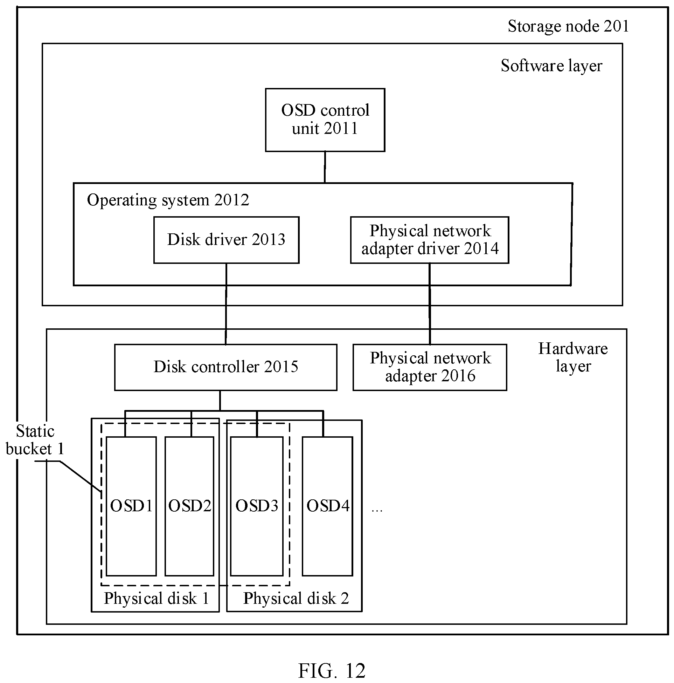

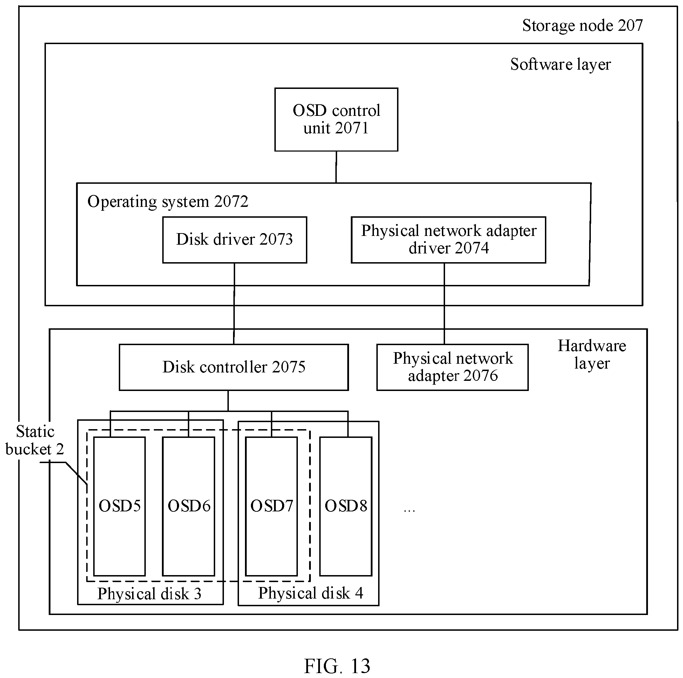

The object storage system shown in FIG. 3 is described below in detail with reference to FIG. 11 to FIG. 13. FIG. 11 is a schematic diagram of connection of a data center in an object storage system according to an embodiment of the present invention. FIG. 12 and FIG. 13 are schematic diagram of a structures of storage nodes according to embodiments of the present invention.

First, refer to FIG. 11. In this embodiment, a cloud platform 10 is set in a data center 1, and is connected to both a storage node 201, a storage node 202, and a remote connection gateway 204 via a switching device 203. A data center 2 is set with a switching device 206, a storage node 207, a storage node 208, and a remote connection gateway 205 for connection. The storage node 207, the storage node 208, and the remote connection gateway 205 are both connected to the switching device 206. The data center 1 is set in a region 1, the data center 2 is set in a region 2, and a remote connection channel is directly set between the remote connection gateway 204 and the remote connection gateway 205, so that the data center 1 and the data center 2 are connected across regions.

For example, the remote connection gateways may be implemented via a virtual private network (Virtual Private Network, VPN) or a private line network, and the storage node may be implemented by using a server set with a plurality of physical disks.

Refer to FIG. 12. The storage node 207 includes a software layer and a hardware layer. The hardware layer includes a disk controller 2075, a physical network adapter 2076, a physical disk 1, and a physical disk 2. The software layer includes an object storage device OSD control unit 2011 and an operating system 2012. The OSD control unit 2011 runs on the operating system 2012. The operating system 2012 includes a disk driver 2013 and a physical network adapter driver 2014. The cloud platform 10 may communicate with an OSD control unit 2011 through a physical network adapter 2016. The OSD control unit 2011 controls, by using the disk driver 2013, a disk controller 2015 to set the physical disk 1 and the physical disk 2 as a plurality of object storage devices OSDs. After receiving an instruction for creating a static bucket 1, the cloud platform 10 indicates the OSD control unit 2011 to create the static bucket 1. In this case, the OSD control unit 2011 sets OSDs 1 to 3 as the static bucket 1.

The storage node 207 shown in FIG. 13 also has a similar structure. After receiving an instruction for creating a static bucket 2, the cloud platform 10 indicates an OSD control unit 2071 to create the static bucket 2. In this case, the OSD control unit 2071 sets OSDs 5 to 7 as the static bucket 2.

Further, after receiving the cross-region configuration policy instruction in Embodiment 1 or Embodiment 3 or the dynamic bucket creation instruction in Embodiment 2, the cloud platform 10 indicates the OSD control unit 2011 to send, to the storage node 207 through the remote connection channel, objects stored in the OSDs 1 to 3 in the static bucket 1, and the OSD control unit 2071 in the storage node 207 stores the objects in the OSDs 5 to 7.

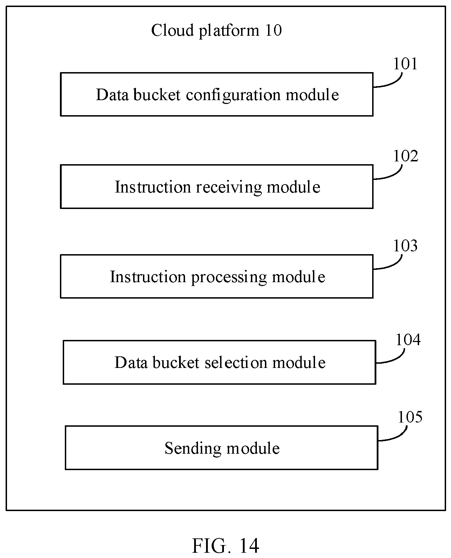

FIG. 14 is a schematic diagram of an apparatus structure of a cloud platform according to an embodiment of the present invention. As shown in FIG. 14, a cloud platform 10 includes a data bucket configuration module 101, an instruction receiving module 102, an instruction processing module 103, a data bucket selection module 104, and a sending module 105. The foregoing functional modules are configured to implement related functions of the cloud platform 10 in Embodiment 1.

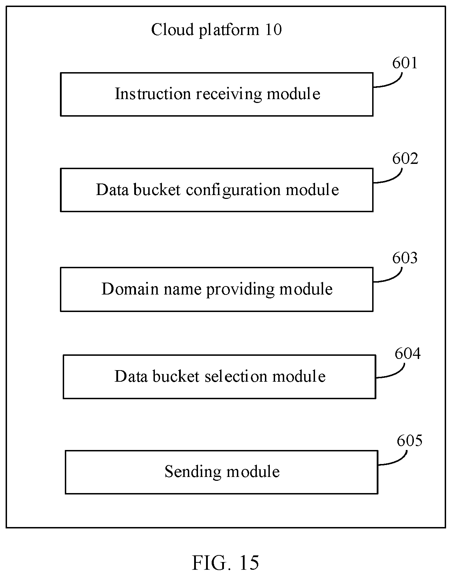

FIG. 15 is a schematic diagram of an apparatus structure of a cloud platform according to an embodiment of the present invention. As shown in FIG. 15, the cloud platform 10 includes an instruction receiving module 601, a data bucket configuration module 602, a domain name providing module 603, a data bucket selection module 604, and a sending module 605. The foregoing functional modules are configured to implement related functions of the cloud platform 10 in Embodiment 1.

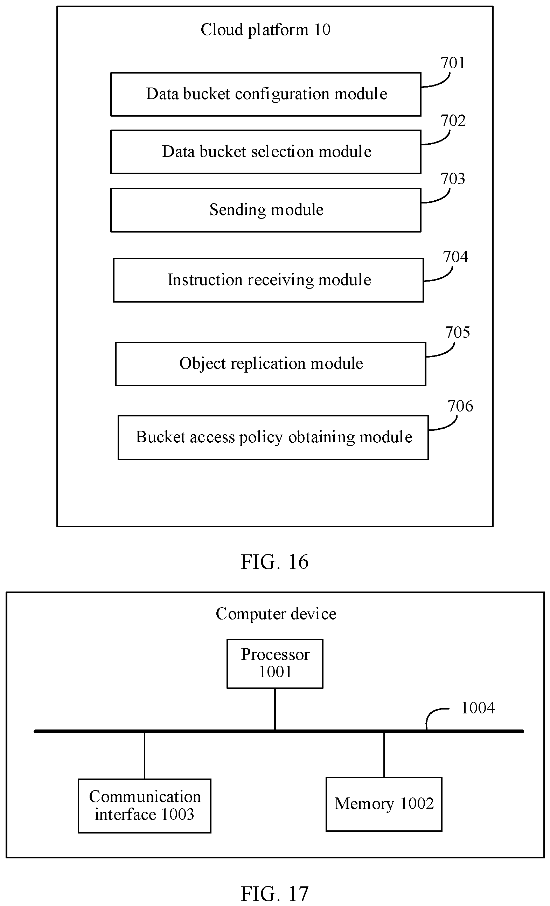

FIG. 16 is a schematic diagram of an apparatus structure of a cloud platform according to an embodiment of the present invention. As shown in FIG. 16, a cloud platform 10 includes a data bucket configuration module 701, a data bucket selection module 702, a sending module 703, an instruction receiving module 704, an object replication module 705, and a bucket access policy obtaining module 706. The foregoing functional modules are configured to implement related functions of the cloud platform 10 in Embodiment 1.

Further, FIG. 17 is a schematic diagram of an apparatus structure of a computer device according to an embodiment of the present invention. As shown in FIG. 17, the computer device includes a processor 1001, a memory 1002, a communication interface 1003, and a bus 1004. The processor 1001, the memory 1002, and the communication interface 1003 are both connected to the bus 1004. The memory 1002 is configured to store computer-executable instructions. The processor 1001 is configured to execute the computer-executable instructions stored in the memory 1002, to enable the computer device to implement the method performed by the cloud platform 10.

Optionally, the cloud platform 10 may be implemented by using a computer cluster including a plurality of computer devices. This is not limited in embodiments of the present invention.

In addition, an embodiment of the present invention further provides a computer storage medium, including computer-readable instructions. When the computer-readable instructions are executed, the method performed by the cloud platform 10 is implemented.

An embodiment of the present invention further provides a computer program product including instructions. When the instructions are run on a computer, the computer is enabled to perform the method performed by the cloud platform 10.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, all or some of the procedures or functions in embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (D SL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A method for providing a cloud storage service, comprising:
configuring a first data bucket and a second data bucket for a tenant, wherein the first data bucket is set in a first region, the second data bucket is set in a second region, and a data object stored in the second data bucket is a cross-region backup of a data object stored in the first data bucket;
receiving a third data bucket creation instruction inputted by the tenant,
providing a domain name of a third data bucket to the tenant according to the third data bucket creation instruction,
receiving an access request sent by a client for the domain name of the third data bucket, and selecting a target data bucket from the first data bucket and the second data bucket based on working statuses of the first data bucket and the second data bucket; and
returning an IP address of the target data bucket to the client.

2. The method according to claim 1, wherein the configuring a first data bucket and a second data bucket for a tenant comprises:
receiving a first data bucket creation instruction inputted by the tenant, wherein the first data bucket creation instruction indicates the first region specified by the tenant, and creating the first data bucket in the first region according to the first data bucket creation instruction, wherein the first data bucket is used to store an object uploaded by the tenant; and
receiving a second data bucket creation instruction inputted by the tenant, wherein the second data bucket creation instruction indicates the second region specified by the tenant, and creating the second data bucket in the second region according to the second data bucket creation instruction.

3. The method according to claim 1 or 2, wherein the method further comprises:
receiving an inter-bucket cross-region configuration instruction inputted by the tenant, wherein the inter-bucket cross-region configuration instruction indicates to use the first data bucket as a source bucket and use the second data bucket as a target bucket; and
replicating the object stored in the source bucket into the target bucket across regions according to the inter-bucket cross-region configuration instruction.

4. The method according to any one of claims 1 to 3, wherein the selecting a target data bucket from the first data bucket and the second data bucket based on working statuses of the first data bucket and the second data bucket comprises:
if the working status of either of the first data bucket and the second data bucket is abnormal, selecting, from the first data bucket and the second data bucket, a data bucket whose working status is normal as the target data bucket.

5. The method according to any one of claims 1 to 4, wherein the selecting a target data bucket from the first data bucket and the second data bucket based on working statuses of the first data bucket and the second data bucket comprises:
selecting a data bucket specified by the tenant as the target data bucket, or selecting a data bucket that is physically nearest to the client as the target data bucket.

6. The method according to claim 5, wherein the method further comprises: obtaining a bucket access policy for the tenant, wherein the bucket access policy indicates a cloud platform to select the data bucket that is physically nearest to the client as the target data bucket or select the data bucket specified by the tenant as the target data bucket when determining that the working statuses of the first data bucket and the second data bucket are both normal.

7. A data bucket management method for an object storage service, comprising:
receiving a data bucket creation instruction inputted by a tenant, wherein the data bucket creation instruction indicates a first region and a second region;
creating a first data bucket in the first region, and creating a second data bucket in the second region, wherein an object stored in the first data bucket is set as a cross-region backup of an object stored in the second data bucket;
providing the tenant with a domain name of a third data bucket;
receiving an access request sent by a client for the domain name of the third data bucket, and selecting a target data bucket from the first data bucket and the second data bucket based on working statuses of the first data bucket and the second data bucket; and
returning an IP address of the target data bucket to the client.

8. The method according to claim 7, wherein the selecting a target data bucket from the first data bucket and the second data bucket based on working statuses of the first data bucket and the second data bucket comprises:
if it is determined that the working status of one of the first data bucket and the second data bucket is abnormal, selecting, from the first data bucket and the second data bucket, a data bucket whose working status is normal as the target data bucket.

9. The method according to claim 7 or 8, wherein the selecting a target data bucket from the first data bucket and the second data bucket based on working statuses of the first data bucket and the second data bucket comprises:
selecting the first data bucket or the second data bucket as the target data bucket if it is determined that the working statuses of the first data bucket and the second data bucket are both normal.

10. A data bucket management method for an object storage service, comprising:
configuring a first data bucket and a second data bucket for a tenant, wherein the first data bucket is set in a first region, the second data bucket is set in a second region, and a data object stored in the second data bucket is a cross-region backup of a data object stored in the first data bucket;
receiving an access request sent by a client for a domain name of the first data bucket, and selecting a target data bucket from the first data bucket and the second data bucket based on working statuses of the first data bucket and the second data bucket; and
returning an IP address of the target data bucket to the client.

11. The method according to claim 10, wherein the configuring a first data bucket and a second data bucket for a tenant comprises:
receiving a first data bucket creation instruction inputted by the tenant, wherein the first data bucket creation instruction indicates the first region specified by the tenant, and creating the first data bucket in the first region according to the first data bucket creation instruction, wherein the first data bucket is used to store an object uploaded by the tenant; and
receiving a second data bucket creation instruction inputted by the tenant, wherein the second data bucket creation instruction indicates the second region specified by the tenant, and creating the second data bucket in the second region according to the second data bucket creation instruction.

12. The method according to claim 10 or 11, wherein the method further comprises:
receiving an inter-bucket cross-region configuration instruction inputted by the tenant, wherein the inter-bucket cross-region configuration instruction indicates to use the first data bucket as a source bucket and use the second data bucket as a target bucket; and
replicating the object stored in the source bucket into the target bucket across regions according to the inter-bucket cross-region configuration instruction.

13. The method according to any one of claims 10 to 12, wherein the selecting a target data bucket from the first data bucket and the second data bucket based on working statuses of the first data bucket and the second data bucket comprises:
if the working status of one of the first data bucket and the second data bucket is abnormal, selecting, from the first data bucket and the second data bucket, a data bucket whose working status is normal as the target data bucket.

14. The method according to any one of claims 10 to 13, wherein the selecting a target data bucket from the first data bucket and the second data bucket based on working statuses of the first data bucket and the second data bucket comprises:
selecting a data bucket specified by the tenant as the target data bucket, or selecting a data bucket that is physically nearest to the client as the target data bucket.

15. The method according to any one of claims 10 to 13, wherein the method further comprises: obtaining a bucket access policy for the tenant, wherein the bucket access policy indicates a cloud platform to select the data bucket that is physically nearest to the client as the target data bucket or select the data bucket specified by the tenant as the target data bucket when determining that the working statuses of the first data bucket and the second data bucket are both normal.

16. A cloud platform, comprising:
a data bucket configuration module, configured to configure a first data bucket and a second data bucket for a tenant, wherein the first data bucket is set in a first region, the second data bucket is set in a second region, and a data object stored in the second data bucket is a cross-region backup of a data object stored in the first data bucket;
an instruction receiving module, configured to receive a third data bucket creation instruction inputted by the tenant;
an instruction processing module, configured to provide a domain name of a third data bucket to the tenant according to the third data bucket creation instruction;
a data bucket selection module, configured to: receive an access request sent by a client for the domain name of the third data bucket, and select a target data bucket from the first data bucket and the second data bucket based on working statuses of the first data bucket and the second data bucket; and
a sending module, configured to return an IP address of the target data bucket to the client.

17. The cloud platform according to claim 16, wherein the data bucket configuration module is configured to:
receive a first data bucket creation instruction inputted by the tenant, wherein the first data bucket creation instruction indicates the first region specified by the tenant, and create the first data bucket in the first region according to the first data bucket creation instruction, wherein the first data bucket is used to store an object uploaded by the tenant; and
receive a second data bucket creation instruction inputted by the tenant, wherein the second data bucket creation instruction indicates the second region specified by the tenant, and create the second data bucket in the second region according to the second data bucket creation instruction.

18. The cloud platform according to claim 16 or 17, wherein the instruction receiving module is further configured to:
receive an inter-bucket cross-region configuration instruction inputted by the tenant, wherein the inter-bucket cross-region configuration instruction indicates to use the first data bucket as a source bucket and use the second data bucket as a target bucket; and
the instruction processing module is further configured to replicate the object stored in the source bucket into the target bucket across regions according to the inter-bucket cross-region configuration instruction.

19. The cloud platform according to any one of claims 16 to 18, wherein the data bucket selection module is configured to:
if the working status of either of the first data bucket and the second data bucket is abnormal, select, from the first data bucket and the second data bucket, a data bucket whose working status is normal as the target data bucket.

20. The cloud platform according to any one of claims 16 to 19, wherein the data bucket selection module is configured to:
select a data bucket specified by the tenant as the target data bucket, or select a data bucket that is physically nearest to the client as the target data bucket.

21. The cloud platform according to claim 20, wherein the instruction receiving module is further configured to obtain a bucket access policy for the tenant, wherein the bucket access policy indicates the cloud platform to select the data bucket that is physically nearest to the client as the target data bucket or select the data bucket specified by the tenant as the target data bucket when determining that the working statuses of the first data bucket and the second data bucket are both normal.

22. A cloud platform, comprising:
an instruction receiving module, configured to receive a data bucket creation instruction inputted by a tenant, wherein the data bucket creation instruction indicates a first region and a second region;
a data bucket configuration module, configured to: create a first data bucket in the first region, and create a second data bucket in the second region, wherein an object stored in the first data bucket is set as a cross-region backup of an object stored in the second data bucket;
a domain name providing module, configured to provide the tenant with a domain name of a third data bucket;
a data bucket selection module, configured to: receive an access request sent by a client for the domain name of the third data bucket, and select a target data bucket from the first data bucket and the second data bucket based on working statuses of the first data bucket and the second data bucket; and
a sending module, configured to return an IP address of the target data bucket to the client.

23. The cloud platform according to claim 22, wherein the data bucket selection module is configured to:
if it is determined that the working status of one of the first data bucket and the second data bucket is abnormal, select, from the first data bucket and the second data bucket, a data bucket whose working status is normal as the target data bucket.

24. The cloud platform according to claim 22 or 23, wherein the data bucket selection module is configured to:
select the first data bucket or the second data bucket as the target data bucket if it is determined that the working statuses of the first data bucket and the second data bucket are both normal.

25. A cloud platform, comprising:
a data bucket configuration module, configured to configure a first data bucket and a second data bucket for a tenant, wherein the first data bucket is set in a first region, the second data bucket is set in a second region, and a data object stored in the second data bucket is a cross-region backup of a data object stored in the first data bucket;
a data bucket selection module, configured to: receive an access request sent by a client for a domain name of the first data bucket, and select a target data bucket from the first data bucket and the second data bucket based on working statuses of the first data bucket and the second data bucket; and
a sending module, configured to return an IP address of the target data bucket to the client.

26. The cloud platform according to claim 25, wherein the data bucket configuration module is configured to:
receive a first data bucket creation instruction inputted by the tenant, wherein the first data bucket creation instruction indicates the first region specified by the tenant, and create the first data bucket in the first region according to the first data bucket creation instruction, wherein the first data bucket is used to store an object uploaded by the tenant; and
receive a second data bucket creation instruction inputted by the tenant, wherein the second data bucket creation instruction indicates the second region specified by the tenant, and create the second data bucket in the second region according to the second data bucket creation instruction.

27. The cloud platform according to claim 25 or 26, comprising:
an instruction receiving module, configured to receive an inter-bucket cross-region configuration instruction inputted by the tenant, wherein the inter-bucket cross-region configuration instruction indicates to use the first data bucket as a source bucket and use the second data bucket as a target bucket; and
an object replication module, configured to replicate the object stored in the source bucket into the target bucket across regions according to the inter-bucket cross-region configuration instruction.

28. The cloud platform according to any one of claims 25 to 27, wherein the data bucket selection module is configured to:
if the working status of one of the first data bucket and the second data bucket is abnormal, select, from the first data bucket and the second data bucket, a data bucket whose working status is normal as the target data bucket.

29. The cloud platform according to any one of claims 25 to 28, wherein the data bucket selection module is configured to:
select a data bucket specified by the tenant as the target data bucket, or select a data bucket that is physically nearest to the client as the target data bucket.

30. The cloud platform according to any one of claims 25 to 28, further comprising a bucket access policy obtaining module, configured to obtain a bucket access policy for the tenant, wherein the bucket access policy indicates the cloud platform to select the data bucket that is physically nearest to the client as the target data bucket or select the data bucket specified by the tenant as the target data bucket when determining that the working statuses of the first data bucket and the second data bucket are both normal.

31. A computer device, comprising a processor and a memory, wherein
the memory is configured to store computer-executable instructions; and
the processor is configured to execute the computer-executable instructions stored in the memory, to enable the computer device to implement the method according to any one of claims 1 to 6.

32. A computer storage medium, comprising computer-readable instructions, wherein when the computer-readable instructions are executed, the method according to any one of claims 1 to 6 is implemented.

33. A computer program product comprising instructions, wherein when the instructions are run on a computer, the computer is enabled to perform the method according to any one of claims 1 to 6.

34. A computer device, wherein the computer device comprises a processor and a memory, wherein
the memory is configured to store computer-executable instructions; and
the processor is configured to execute the computer-executable instructions stored in the memory, to enable the computer device to implement the method according to any one of claims 7 to 9.

35. A computer storage medium, comprising computer-readable instructions, wherein when the computer-readable instructions are executed, the method according to any one of claims 7 to 9 is implemented.

36. A computer program product comprising instructions, wherein when the instructions are run on a computer, the computer is enabled to perform the method according to any one of claims 7 to 9.

37. A computer device, comprising a processor and a memory, wherein
the memory is configured to store computer-executable instructions; and
the processor is configured to execute the computer-executable instructions stored in the memory, to enable the computer device to implement the method according to any one of claims 10 to 15.

38. A computer storage medium, comprising computer-readable instructions, wherein when the computer-readable instructions are executed, the method according to any one of claims 10 to 15 is implemented.

39. A computer program product comprising instructions, wherein when the instructions are run on a computer, the computer is enabled to perform the method according to any one of claims 10 to 115.
